# EUROPEAN PATENT APPLICATION

(11) **EP 4 648 134 A1**
(43) Date of publication of application: **12.11.2025**
(21) Application number: 24738783.0
(22) Date of filing: 08.01.2024
(51) Int. Cl.: H01M 4/525, H01M 4/505, H01M 4/36, H01M 4/131, H01M 10/052, C01G 53/00, H01M 4/02

(54) **POSITIVE ELECTRODE ACTIVE MATERIAL FOR LITHIUM SECONDARY BATTERY AND METHOD FOR MANUFACTURING SAME**

(30) Priority: 06.01.2023 KR 20230002290
(71) Applicant: Battery Solution Inc., Seoul 04763 (KR)
(72) Inventor: PARK, Jang Uk, Incheon 21404 (KR); SIM, Jae Hoon, Incheon 22399 (KR); CHOI, Kyoung Ran, Gunsan-si Jeollabuk-do 54074 (KR)
(74) Representative: Dompatent Partnerschaft von Patent- und Rechtsanwälten mbB
(86) International application number: PCT/KR2024/000356
(87) International publication number: WO 2024/147715

(57) **Abstract**

The positive electrode active material according to the present invention may: comprise lithium, a transition metal, and oxygen; comprise a layered crystalline structure in which a lithium layer comprising the lithium and a transition metal layer comprising the transition metal are alternately and repeatedly arranged; and have provided, in the lithium layer or the transition metal layer, a partially regular mixed structure in which a unit arrangement is repeatedly provided in one direction, the unit arrangement having any one of the transition metal and the lithium arranged twice in a row in the one direction, and then the other arranged one time in the one direction.

## Description

### [Technical Field]

The present invention relates to a cathode active material for a lithium secondary battery and a method for manufacturing the same, and more particularly, to a cathode active material for a lithium secondary battery and a method for manufacturing the same, in which electrochemical characteristics are improved by controlling a partially regular mixed structure in which lithium and a transition metal are mixed in a lithium layer or a transition metal layer.

### [Background Art]

A cathode active material refers to an active material that is provided in a cathode of a secondary battery so as to electrochemically store and convert electric energy.

The cathode active material provided in a cathode material has lithium ions in an initial state, and serves to provide the lithium ions to an anode during a charging process of the secondary battery.

Accordingly, the cathode active material is utilized in various industries such as lithium ion batteries, lithium metal batteries, lithium air batteries, lithium ion polymer batteries, and all-solid-state batteries.

As application fields increase, various cathode active materials are being studied. For example, Korean Patent Registration No. 10-0815583 discloses a method for manufacturing a cathode active material for a lithium secondary battery, the method including: preparing a coprecipitation compound by mixing a metal salt aqueous solution including a first metal including nickel, cobalt, and manganese and optionally a second metal, a chelating agent, and a basic aqueous solution; preparing an active material precursor by drying or heat-treating the coprecipitation compound; and preparing lithium composite metal oxide by mixing and sintering the active material precursor and lithium salt, wherein the lithium composite metal oxide has a layered structure.

### [Disclosure]

### [Technical Problem]

One technical object of the present invention is to provide a cathode active material in which stability of a crystal structure is improved under high-voltage conditions.

Another technical object of the present invention is to provide a cathode active material in which stability of a crystal structure is improved under high-temperature conditions.

Still another technical object of the present invention is to provide a cathode active material for a lithium secondary battery, a method for manufacturing the same, and a lithium secondary battery including the same, in which almost no structural collapse of a crystal structure occurs even after performing charge/discharge cycles a plurality of times, so that a high capacity characteristic is exhibited.
to provide a cathode active material in which an initial capacity is improved under high-voltage and high-temperature conditions, and stability for charge/discharge cycles is obtained.

Yet another technical object of the present invention is to provide a cathode active material in which an initial capacity is improved under high-voltage and high-temperature conditions, and stability for charge/discharge cycles is obtained.

Still yet another technical object of the present invention is to provide a method for manufacturing a cathode active material, in which a manufacturing process cost is reduced.

Another technical object of the present invention is to provide a method for manufacturing a cathode active material, in which a manufacturing time is shortened.

Another technical object of the present invention is to provide a method for manufacturing a cathode active material, in which mass production is facilitated.

Technical objects of the present invention are not limited to the technical objects described above.

### [Technical Solution]

In order to achieve the technical objects described above, the present invention provides a cathode active material.

According to one embodiment, the cathode active material includes lithium, a transition metal, and oxygen, wherein the cathode active material includes a layered crystal structure in which a lithium layer including the lithium and a transition metal layer including the transition metal are alternately and repeatedly arranged, and a partially regular mixed structure in which a unit arrangement, which is configured such that one of the transition metal and the lithium is consecutively arranged twice in one direction and the other is arranged once in the one direction, is repeatedly provided in the one direction is provided to the lithium layer or the transition metal layer.

According to one embodiment, the cathode active material may include a layered crystal structure in which the lithium layer including the lithium and the transition metal layer including the transition metal are alternately and repeatedly arranged, and the cathode active material may include a partially regular mixed structure in which a structure, which is configured such that the transition metal or the lithium is regularly arranged with a predetermined cycle within the transition metal layer or the lithium layer, is provided to the lithium layer or the transition metal layer.

According to one embodiment, the unit arrangement may include a first unit arrangement and a second unit arrangement, the first unit arrangement may be configured such that the transition metal is consecutively arranged twice, and the lithium is arranged once, and the second unit arrangement may be configured such that the lithium is consecutively arranged twice, and the transition metal is arranged once.

According to one embodiment, the partially regular mixed structure may include a first partially regular mixed structure and a second partially regular mixed structure, the first partially regular mixed structure may include the first unit arrangement, and the second partially regular mixed structure may include the second unit arrangement.

According to one embodiment, the partially regular mixed structure may further include a third partially regular mixed structure in which the lithium and the transition metal are alternately and repeatedly arranged.

According to one embodiment, the first partially regular mixed structure and the second partially regular mixed structure may be observed, upon crystal structure analysis of crystal grains of the cathode active material in a [1, -1, 0] axis direction, as a streak-shaped electron diffraction pattern that does not belong to an R-3m layered crystal structure between electron diffraction dots exhibiting the R-3m layered crystal structure in selected area electron diffraction (SAED).

According to one embodiment, the third mixed structure may be configured such that upon crystal structure analysis of crystal grains of the cathode active material in a [1, -1, 0] axis direction, an additional-dot-shaped electron diffraction pattern that does not belong to an R-3m layered crystal structure is observed between electron diffraction dots exhibiting the R-3m layered crystal structure in selected area electron diffraction (SAED) .

According to one embodiment, a volume variation of a unit cell may be reduced by the partially regular mixed structure upon charging/discharging.

According to one embodiment, the transition metal may include at least one of nickel, cobalt, or manganese.

According to one embodiment, when a molar ratio of the nickel in the transition metal is greater than 0.8 and less than or equal to 0.9, a volume variation of a unit cell may be less than or equal to 9% upon charging at 4.5 V, when the molar ratio of the nickel in the transition metal is greater than 0.7 and less than or equal to 0.8, the volume variation of the unit cell may be less than or equal to 7% upon the charging at 4.5 V, when the molar ratio of the nickel in the transition metal is greater than 0.6 and less than or equal to 0.7, the volume variation of the unit cell may be less than or equal to 5% upon the charging at 4.5 V, when the molar ratio of the nickel in the transition metal is less than or equal to 0.6, the volume variation of the unit cell may be less than or equal to 4% upon the charging at 4.5 V, or when the molar ratio of the nickel in the transition metal is less than or equal to 0.6, the volume variation of the unit cell may be less than or equal to 6% upon the charging at 4.7 V.

According to one embodiment, when a molar ratio of the nickel in the transition metal is less than or equal to 0.5, a phase transition to H2/H3 may be prevented upon charging at 4.8 V or more.

According to one embodiment, when a molar ratio of the nickel in the transition metal is less than or equal to 0.5, heat may be generated at 225 °C or more upon charging at 4.5 V.

In order to achieve the technical objects described above, the present invention provides a method for manufacturing the cathode active material described above.

According to one embodiment, the method for manufacturing the cathode active material described above includes: preparing a transition metal source; providing the transition metal source, an ammonia chelating agent, and a pH regulator in a reactor, and preparing a cathode active material precursor including transition metal hydroxide by a coprecipitation synthesis scheme; and preparing the cathode active material by mixing and sintering the cathode active material precursor and a lithium precursor, wherein the cathode active material includes lithium, a transition metal, and oxygen, a lithium layer including the lithium and a transition metal layer including the transition metal are alternately and repeatedly arranged, a partially regular mixed structure in which the transition metal and the lithium are mixed is provided to the lithium layer or the transition metal layer, and generation of the partially regular mixed structure is controlled according to a pH value of the reactor and an input molar ratio of the ammonia chelating agent and the transition metal source.

According to one embodiment, in the providing of the transition metal source, the ammonia chelating agent, and the pH regulator in the reactor, and the preparing of the cathode active material precursor including the transition metal hydroxide by the coprecipitation synthesis scheme, the pH value of the reactor may be controlled to be greater than or equal to 11.0, and less than or equal to 11.3.

According to one embodiment, in the providing of the transition metal source, the ammonia chelating agent, and the pH regulator in the reactor, and the preparing of the cathode active material precursor including the transition metal hydroxide by the coprecipitation synthesis scheme, the input molar ratio of the ammonia chelating agent and the transition metal source may be controlled to be greater than 1:0.8 and less than 1:1.3.

### [Advantageous Effects]

According to the present invention, a method for manufacturing a cathode active material may include: preparing a transition metal source; providing the transition metal source, an ammonia chelating agent, and a pH regulator in a reactor, and preparing a cathode active material precursor including transition metal hydroxide by a coprecipitation synthesis scheme; and preparing the cathode active material by mixing and sintering the cathode active material precursor and a lithium precursor.

In the providing of the transition metal source, the transition metal source may include a nickel source, a cobalt source, and a manganese source, and a partially regular mixed structure in which lithium and transition metal are mixed may be generated in a lithium layer or a transition metal layer of the cathode active material by controlling an atomic ratio of nickel in the nickel source (e.g., 45 at%) and an atomic ratio of manganese in the manganese source (e.g., 30 at% or more). Accordingly, a cathode active material in which stability of a crystal structure is improved at high voltages and high temperatures can be provided.

In addition, in the providing of the transition metal source, the ammonia chelating agent, and the pH regulator in the reactor, and the preparing of the cathode active material precursor including the transition metal hydroxide by the coprecipitation synthesis scheme, the partially regular mixed structure may be generated in the lithium layer or the transition metal layer of the cathode active material by controlling a pH value of the reactor (e.g., 11.0 or more, and 11.3 or less) and an input molar ratio of the ammonia chelating agent and the transition metal source (e.g., 1:1 or more, and 1:1.13 or less). Accordingly, a cathode active material in which stability of a crystal structure is improved at high voltages and high temperatures can be provided.

The cathode active material manufactured by the manufacturing method described above may include the lithium, the transition metal, and the oxygen. In addition, the cathode active material may include a layered crystal structure in which the lithium layer including the lithium and the transition metal layer including the transition metal are alternately and repeatedly arranged. In addition, the partially regular mixed structure in which the lithium and the transition metal are mixed may be provided in the lithium layer or the transition metal layer of the cathode active material. Accordingly, a cathode active material in which stability of a crystal structure is improved under high-voltage and high-temperature conditions can be provided.

Therefore, when the cathode active material is applied to a lithium secondary battery, due to the partially regular mixed structure of the cathode active material, the lithium secondary battery can achieve an improved initial capacity and improved stability for long-term charge/discharge cycles under high-voltage and high-temperature conditions.

In addition, when the cathode active material is applied to an all-solid-state battery, due to the partially regular mixed structure of the cathode active material, the all-solid-state battery can achieve an improved lifespan and an improved rate determining characteristic since collapse of a surface structure of the cathode active material is minimized during charge/discharge cycles.

### [Description of Drawings]

FIG. 1 is a flowchart for describing a method for manufacturing a cathode active material according to an embodiment of the present invention.
FIG. 2 is a view for describing a transition metal source according to the embodiment of the present invention.
FIG. 3 is a view for describing a method for preparing the transition metal source according to the embodiment of the present invention.
FIG. 4 is a view for describing a method for preparing a cathode active material precursor according to the embodiment of the present invention.
FIG. 5 is a view for describing a method for preparing the cathode active material according to the embodiment of the present invention.
FIG. 6 is a view for describing a crystal structure of the cathode active material according to the embodiment of the present invention.
FIG. 7 is a view for describing a partially regular mixed structure of the cathode active material according to the embodiment of the present invention.
FIGS. 8 to 11 are photographs for describing a crystal structure of a cathode active material according to Experimental Example 1 of the present invention.
FIG. 12 is a graph for comparing crystal structures of cathode active materials according to Experimental Example 2 and Comparative Example 2-1 of the present invention.
FIGS. 13 to 15 are photographs for describing the crystal structure of the cathode active material according to Experimental Example 2 of the present invention.
FIG. 16 is a photograph for describing a crystal structure of a cathode active material according to Comparative Example 2-2 of the present invention.
FIG. 17 is a TEM analysis photograph for describing stability for long-term charge/discharge cycles of the cathode active material according to Experimental Example 2 of the present invention.
FIG. 18 is a photograph for describing a crystal structure of a cathode active material according to Experimental Example 3 of the present invention.
FIG. 19 is a photograph for describing a crystal structure of a cathode active material according to Experimental Example 4 of the present invention.
FIG. 20 is a photograph for describing a crystal structure of a cathode active material according to Experimental Example 5 of the present invention.
FIG. 21 is a photograph for describing a crystal structure of a cathode active material according to Experimental Example 6 of the present invention.
FIG. 22 is a graph for comparing charge/discharge curves of cathodes to which the cathode active materials according to Experimental Example 6 and Comparative Example 2-1 of the present invention are applied.
FIG. 23 is a photograph for describing a crystal structure of a cathode active material according to Experimental Example 7 of the present invention.
FIG. 24 is a photograph for describing a crystal structure of a cathode active material according to Experimental Example 8 of the present invention.
FIG. 25 is a photograph for comparing crystal structures of cathode active materials according to Experimental Example 9 and Experimental Example 10 of the present invention.
FIG. 26 is a photograph for comparing crystal structures of cathode active materials according to Experimental Example 11 and Experimental Example 12 of the present invention.
FIG. 27 is a photograph for describing a crystal structure of a cathode active material according to Experimental Example 13 of the present invention.
FIGS. 28 and 29 are photographs for describing crystal structures of cathode active materials according to Experimental Example 14 and Experimental Example 15 of the present invention.

### [Mode for Invention]

Hereinafter, exemplary embodiments of the present invention will be described in detail with reference to the accompanying drawings. However, the technical idea of the present invention is not limited to the embodiments described herein, but may be embodied in different forms. The embodiments introduced herein are provided to sufficiently deliver the idea of the present invention to those skilled in the art so that the disclosed contents may become thorough and complete.

When it is mentioned in the present disclosure that one element is on another element, it means that one element may be directly formed on another element, or a third element may be interposed between one element and another element. Further, in the drawings, thicknesses of films and regions are exaggerated for effective description of the technical contents.

In addition, although the terms such as first, second, and third have been used to describe various elements in various embodiments of the present disclosure, the elements are not limited by the terms. The terms are used only to distinguish one element from another element. Therefore, an element mentioned as a first element in one embodiment may be mentioned as a second element in another embodiment. The embodiments described and illustrated herein include their complementary embodiments, respectively. Further, the term "and/or" used in the present disclosure is used to include at least one of the elements enumerated before and after the term.

As used herein, an expression in a singular form includes a meaning of a plural form unless the context clearly indicates otherwise. Further, the terms such as "including" and "having" are intended to designate the presence of features, numbers, steps, elements, or combinations thereof described herein, and shall not be construed to preclude any possibility of the presence or addition of one or more other features, numbers, steps, elements, or combinations thereof. In addition, the term "connection" used herein is used to include both indirect and direct connections of a plurality of elements.

Further, in the following description of the present invention, detailed descriptions of known functions or configurations incorporated herein will be omitted when they may make the gist of the present invention unnecessarily unclear.

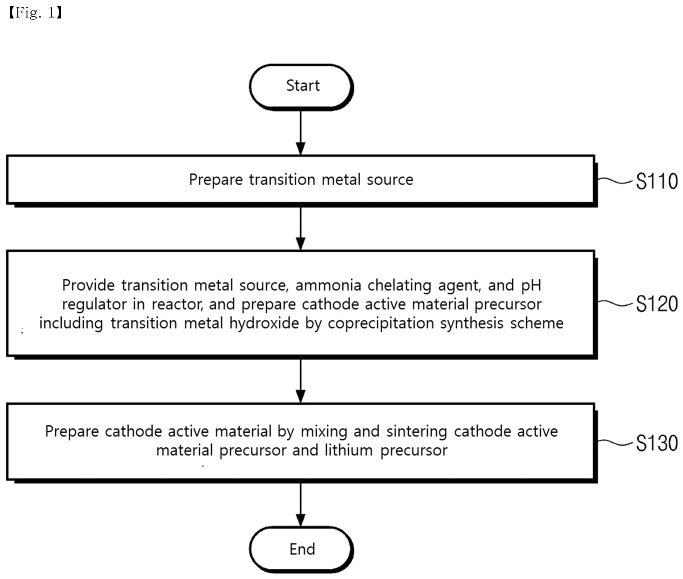

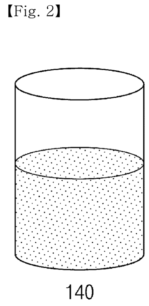

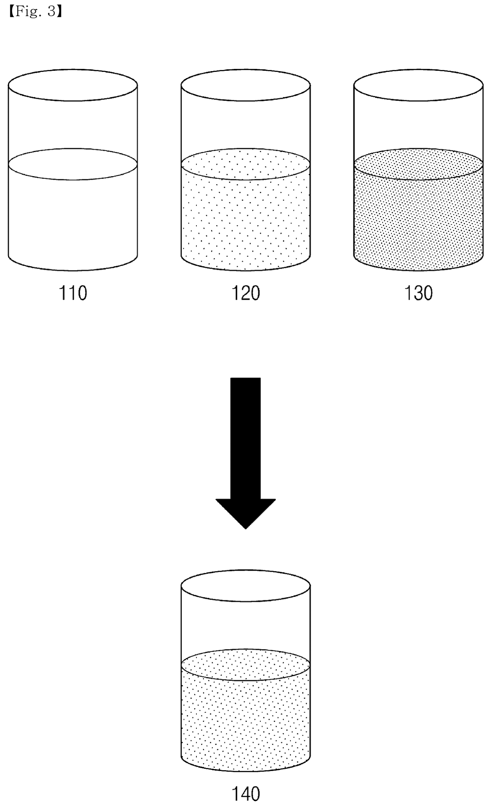

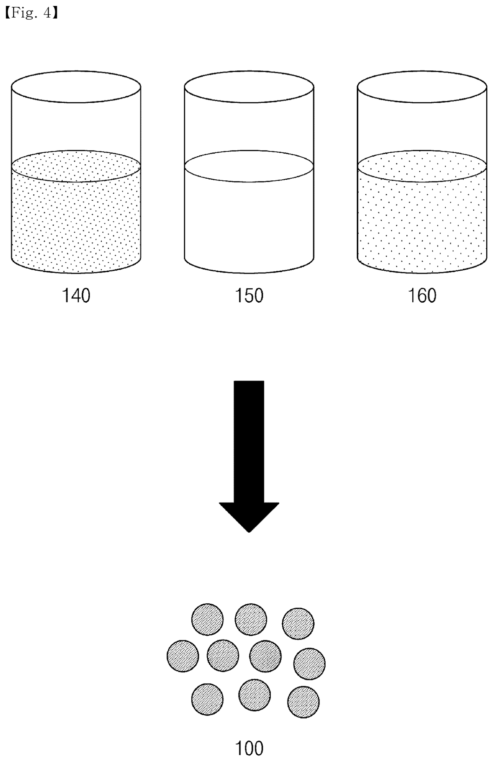

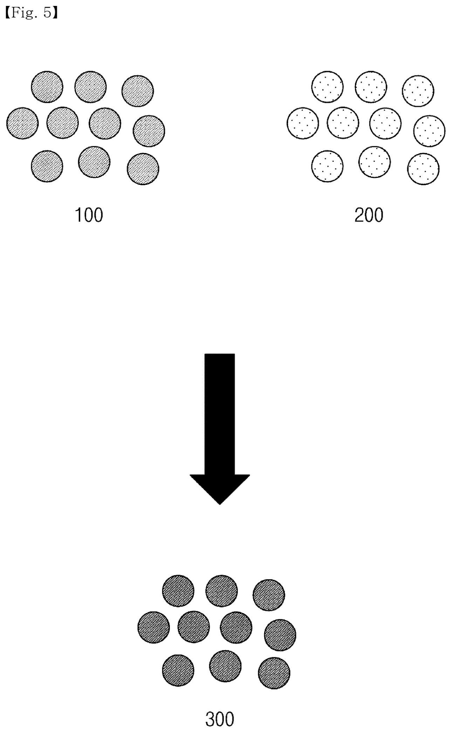

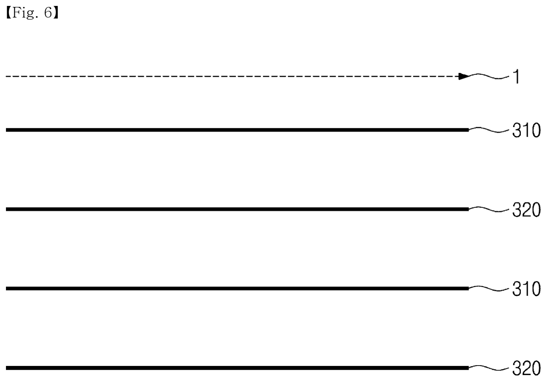

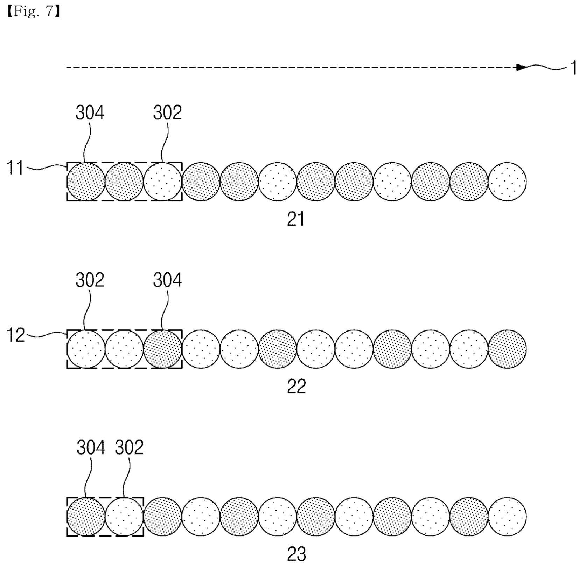

FIG. 1 is a flowchart for describing a method for manufacturing a cathode active material according to an embodiment of the present invention, FIG. 2 is a view for describing a transition metal source according to the embodiment of the present invention, FIG. 3 is a view for describing a method for preparing the transition metal source according to the embodiment of the present invention, FIG. 4 is a view for describing a method for preparing a cathode active material precursor according to the embodiment of the present invention, FIG. 5 is a view for describing a method for preparing the cathode active material according to the embodiment of the present invention, FIG. 6 is a view for describing a crystal structure of the cathode active material according to the embodiment of the present invention, and FIG. 7 is a view for describing a partially regular mixed structure of the cathode active material according to the embodiment of the present invention.

Referring to FIGS. 1 to 3, a transition metal source 140 may be prepared (S110).

As shown in FIG. 3, the transition metal source 140 may be prepared by mixing at least one of a nickel source 110, a cobalt source 120, or a manganese source 130. For example, the nickel source 110 may include nickel sulfate (NiSO_{4·}6H₂O). For example, the cobalt source 120 may include cobalt sulfate (CoSO_{4·}7H₂O). For example, the manganese source 130 may include manganese sulfate (MnSO_{4·}H₂O).

According to one embodiment, the transition metal source 140 may be prepared by mixing the nickel source 110, the cobalt source 120, and the manganese source 130. In addition, generation of a partially regular mixed structure in which lithium 302 and a transition metal 304 are mixed in a lithium layer 310 or a transition metal layer 320 of a cathode active material 300 that will be described below may be controlled according to an atomic ratio of nickel in the nickel source 110 and an atomic ratio of manganese in the manganese source 130.

When an atomic ratio of nickel in the transition metal source 140 is controlled to 45 at%, an atomic ratio of manganese may be controlled to be greater than or equal to 30 at%. Accordingly, the partially regular mixed structure may be generated in the lithium layer 310 or the transition metal layer 320 of the cathode active material 300 that will be described below. Therefore, a cathode active material 300 in which stability of a crystal structure is improved under high-voltage and high-temperature conditions may be provided.

In contrast, when the atomic ratio of nickel in the transition metal source 140 is controlled to 45 at%, and the atomic ratio of manganese is controlled to be less than 30 at%, the partially regular mixed structure may not be generated in the lithium layer 310 or the transition metal layer 320 of the cathode active material 300. Accordingly, the safety of the crystal structure of the cathode active material 300 may be reduced under the high-voltage and high-temperature conditions.

Therefore, according to an embodiment of the present disclosure, when the atomic ratio of nickel in the transition metal source 140 is controlled to 45 at%, the atomic ratio of manganese may be controlled to be greater than or equal to 30 at%. Accordingly, the partially regular mixed structure may be generated in the lithium layer 310 or the transition metal layer 320 of the cathode active material 300 that will be described below. Accordingly, a cathode active material 300 in which stability of a crystal structure is improved under high-voltage and high-temperature conditions may be provided.

In addition, when the atomic ratio of nickel in the transition metal source 140 is controlled to 50 at%, the atomic ratio of manganese may be controlled to be greater than or equal to 32 at%. Accordingly, the partially regular mixed structure may be generated in the lithium layer 310 or the transition metal layer 320 of the cathode active material 300 that will be described below. Accordingly, a cathode active material 300 in which stability of a crystal structure is improved under high-voltage and high-temperature conditions may be provided.

In contrast, when the atomic ratio of nickel in the transition metal source 140 is controlled to 50 at%, and the atomic ratio of manganese is controlled to be less than 32 at%, the partially regular mixed structure may not be generated in the lithium layer 310 or the transition metal layer 320 of the cathode active material 300. Accordingly, the safety of the crystal structure of the cathode active material 300 may be reduced under the high-voltage and high-temperature conditions.

Therefore, according to the embodiment of the present disclosure, when the atomic ratio of nickel in the transition metal source 140 is controlled to 50 at%, the atomic ratio of manganese may be controlled to be greater than or equal to 32 at%. Accordingly, the partially regular mixed structure may be generated in the lithium layer 310 or the transition metal layer 320 of the cathode active material 300 that will be described below. Accordingly, a cathode active material 300 in which safety of a crystal structure is improved under high-voltage and high-temperature conditions may be provided.

Referring to FIGS. 1 and 4, the transition metal source 140, an ammonia chelating agent 150, and a pH regulator 160 may be provided in a reactor, and a cathode active material precursor 100 including transition metal hydroxide may be prepared by a coprecipitation synthesis scheme (S120).

According to one embodiment, in a process of providing the transition metal source 140, the ammonia chelating agent 150, and the pH regulator 160 to the reactor and performing coprecipitation synthesis, an inert gas may be provided to prevent oxidation of a transition metal in the transition metal source 140. For example, the ammonia chelating agent 150 may include ammonia (NH₄OH). For example, the pH regulator 160 may include sodium hydroxide (NaOH). For example, the inert gas may include a nitrogen gas. Accordingly, the cathode active material precursor 100 including the transition metal hydroxide having high purity may be prepared.

In addition, the generation of the partially regular mixed structure in the lithium layer 310 or the transition metal layer 320 of the cathode active material 300 that will be described below may be controlled according to a pH value of the reactor and an input molar ratio of the ammonia chelating agent 150 and the transition metal source 140.

The pH value of the reactor may be controlled to be greater than or equal to 11.0, and less than or equal to 11.3. Accordingly, the partially regular mixed structure may be generated in the lithium layer 310 or the transition metal layer 320 of the cathode active material 300 that will be described below. Accordingly, a cathode active material 300 in which stability of a crystal structure is improved under high-voltage and high-temperature conditions may be provided.

In contrast, when the pH value of the reactor is controlled to be less than 11.0, or greater than 11.3, the partially regular mixed structure may not be generated in the lithium layer 310 or the transition metal layer 320 of the cathode active material 300 that will be described below. Accordingly, the stability of the crystal structure of the cathode active material 300 may be reduced under the high-voltage and high-temperature conditions.

Therefore, according to the embodiment of the present disclosure, the pH value of the reactor may be controlled to be greater than or equal to 11.0, and less than or equal to 11.3. Accordingly, the partially regular mixed structure may be generated in the lithium layer 310 or the transition metal layer 320 of the cathode active material 300 that will be described below. Accordingly, a cathode active material 300 in which stability of a crystal structure is improved under high-voltage and high-temperature conditions may be provided.

In addition, the input molar ratio of the ammonia chelating agent 150 and the transition metal source 140 may be controlled to be greater than 1:0.8 and less than 1:1.3. Accordingly, the partially regular mixed structure may be generated in the lithium layer 310 or the transition metal layer 320 of the cathode active material 300 that will be described below. Accordingly, a cathode active material 300 in which stability of a crystal structure is improved under high-voltage and high-temperature conditions may be provided.

In contrast, when the input molar ratio of the ammonia chelating agent 150 and the transition metal source 140 is controlled to be less than or equal to 1:0.8, or greater than or equal to 1:1.3, the partially regular mixed structure may not be generated in the lithium layer 310 or the transition metal layer 320 of the cathode active material 300 that will bel described below. Accordingly, the stability of the crystal structure of the cathode active material 300 may be reduced under the high-voltage and high-temperature conditions.

Therefore, according to the embodiment of the present disclosure, the input molar ratio of the ammonia chelating agent 150 and the transition metal source 140 may be controlled to be greater than 1:0.8 and less than 1:1.3. Accordingly, the partially regular mixed structure may be generated in the lithium layer 310 or the transition metal layer 320 of the cathode active material 300 that will be described below. Accordingly, a cathode active material 300 in which stability of a crystal structure is improved under high-voltage and high-temperature conditions may be provided.

Referring to FIG. 1 and FIG. 5, a cathode active material 300 may be prepared by mixing and sintering the cathode active material precursor 100 and a lithium precursor 200 (S130).

According to one embodiment, the cathode active material precursor 100 and the lithium precursor 200 may be mixed so that a molar ratio of the cathode active material precursor 100 and the lithium precursor 200 may be greater than or equal to 1:1, and less than or equal to 1:1.3. For example, the cathode active material precursor 100 may include NiCoMn(OH)₂. For example, the lithium precursor 200 may include one of LiOH or Li₂CO₃. In addition, the cathode active material 300 may be prepared by sintering the cathode active material precursor 100 and the lithium precursor 200, which are mixed with each other, at 850 °C or more and 920 °C or less for 5 hours or more. Accordingly, the partially regular mixed structure may be generated in the lithium layer 310 or the transition metal layer 320 of the cathode active material 300 that will be described below. Accordingly, a cathode active material 300 in which stability of a crystal structure is improved under high-voltage and high-temperature conditions may be provided.

In contrast, when the cathode active material precursor 100 and the lithium precursor 200 are mixed so that the molar ratio of the cathode active material precursor 100 and the lithium precursor 200 is less than 1:1, or greater than 1:1.3, the partially regular mixed structure may not be generated in the lithium layer 310 or the transition metal layer 320 of the cathode active material 300. Accordingly, the stability of the crystal structure of the cathode active material 300 may be reduced under the high-voltage and high-temperature conditions.

Therefore, according to the embodiment of the present disclosure, the cathode active material precursor 100 and the lithium precursor 200 may be mixed so that the molar ratio of the cathode active material precursor 100 and the lithium precursor 200 may be greater than or equal to 1:1, and less than or equal to 1:1.13. Accordingly, the partially regular mixed structure may be generated in the lithium layer 310 or the transition metal layer 320 of the cathode active material 300. Accordingly, a cathode active material 300 in which stability of a crystal structure is improved under high-voltage and high-temperature conditions may be provided.

In addition, when an atomic ratio of a nickel element in the transition metal hydroxide of the cathode active material precursor 100 is controlled to 45 at%, a molar ratio of the lithium precursor 200 may be controlled according to an element ratio of manganese in the transition metal hydroxide. For example, when the element ratio of manganese in the transition metal hydroxide of the cathode active material precursor 100 is relatively high, the cathode active material precursor 100 and the lithium precursor 200 may be mixed so that the molar ratio of the cathode active material precursor 100 and the lithium precursor 200 may be 1:1. For another example, when the element ratio of manganese in the transition metal hydroxide of the cathode active material precursor 100 is relatively low, the cathode active material precursor 100 and the lithium precursor 200 may be mixed so that the molar ratio of the cathode active material precursor 100 and the lithium precursor 200 may be 1:1.13. Accordingly, the partially regular mixed structure may be generated in the lithium layer 310 or the transition metal layer 320 of the cathode active material 300, so that a cathode active material 300 in which stability of a crystal structure is improved under high-voltage and high-temperature conditions may be provided.

In conclusion, the method for manufacturing the cathode active material 300 according to the embodiment of the present disclosure may include: preparing the transition metal source 140; providing the transition metal source 140, the ammonia chelating agent 150, and the pH regulator 160 in the reactor, and preparing the cathode active material precursor 100 including the transition metal hydroxide by the coprecipitation synthesis scheme; and preparing the cathode active material 300 by mixing and sintering the cathode active material precursor 100 and the lithium precursor 200.

In the providing of the transition metal source 140, the transition metal source 140 may include the nickel source 110, the cobalt source 120, and the manganese source 130, and the partially regular mixed structure in which the lithium 302 and the transition metal 304 are mixed may be generated in the lithium layer 310 or the transition metal layer 320 of the cathode active material 300 that will be described below by controlling the atomic ratio of nickel in the nickel source 110 (e.g., 45 at%) and the atomic ratio of manganese in the manganese source 120 (e.g., 30 at% or more). Accordingly, a cathode active material in which stability of a crystal structure is improved at high voltages and high temperatures may be provided.

In addition, in the providing of the transition metal source 140, the ammonia chelating agent 150, and the pH regulator 160 in the reactor, and the preparing of the cathode active material precursor 100 including the transition metal hydroxide by the coprecipitation synthesis scheme, the partially regular mixed structure may be generated in the lithium layer 310 or the transition metal layer 320 of the cathode active material 300 that will be described below by controlling the pH value of the reactor (e.g., 11.0 or more and 11.3 or less) and the input molar ratio of the ammonia chelating agent 150 and the transition metal source 140 (e.g., 1:1 or more, and 1:1.13 or less). Accordingly, a cathode active material in which stability of a crystal structure is improved at high voltages and high temperatures may be provided.

Referring to FIGS. 6 and 7, the cathode active material 300 and a crystal structure of the cathode active material 300 will be described.

The cathode active material 300 may include the lithium 302, the transition metal 304, and oxygen. For example, the transition metal 304 may include at least one of nickel, cobalt, or manganese. For example, when an atomic ratio of nickel in the transition metal 304 is 45 at%, an atomic ratio of manganese may be greater than or equal to 30 at%. For another example, when the atomic ratio of nickel in the transition metal 304 is 50 at%, the atomic ratio of manganese may be greater than or equal to 32 at%.

In addition, as shown in FIG. 6, the cathode active material 300 may include a layered crystal structure in which the lithium layer 310 including the lithium 302 and the transition metal layer 320 including the transition metal 304 are alternately and repeatedly arranged. In addition, the partially regular mixed structure in which the lithium 302 and the transition metal 304 are mixed may be provided in the lithium layer 310 or the transition metal layer 320 of the cathode active material 300.

According to the present disclosure, in order to describe the partially regular mixed structure in detail, a configuration in which one of the transition metal 304 and the lithium 302 is consecutively arranged twice in one direction 1 and the other is arranged once in the one direction 1 will be defined as a unit arrangement. Accordingly, the partially regular mixed structure may include a structure in which the first unit arrangement is repeated in the one direction 1. For another example, the unit arrangement may be configured such that one of the transition metal 304 and the lithium 302 is arranged once in the one direction 1 and the other is arranged twice in the one direction 1.

As shown in FIG. 7, the unit arrangement may include a first unit arrangement 11 and a second unit arrangement 12.

The first unit arrangement 11 may be configured such that the transition metal 304 is consecutively arranged twice, and the lithium 302 is repeated once. For another example, the first unit arrangement 11 may be configured such that the lithium 302 is arranged once, and the transition metal 304 is consecutively arranged twice.

In addition, the second unit arrangement 12 may be configured such that the lithium 302 is consecutively arranged twice, and the transition metal 304 is repeated once. For example, the lithium 302 may be consecutively arranged twice. For another example, the second unit arrangement 12 may be configured such that the transition metal 304 is arranged once, and the lithium 302 is consecutively arranged twice.

In addition, as shown in FIG. 7, the partially regular mixed structure may include a first partially regular mixed structure 21 including the first unit arrangement 11, and a second partially regular mixed structure 22 including the second unit arrangement 12. In addition, the partially regular mixed structure may further include a third partially regular mixed structure 23 in which the transition metal 304 and the lithium 302 are alternately and repeatedly arranged.

Therefore, the partially regular mixed structures 21, 22, and 23 provided in the lithium layer 310 or the transition metal layer 320 of the cathode active material 300 may be a new type of crystal structure that is different from a cation mixing structure in which a transition metal and lithium are randomly mixed, which is observed in general lithium-ion cathode materials.

In addition, since the cathode active material 300 has the partially regular mixed structures 21, 22, and 23 provided in the lithium layer 310 or the transition metal layer 320, the cathode active material 300 may be different from a Li₂MnO₃ structure in which lithium and a transition metal are repeated with a 1:2 cycle in a transition metal layer.

Therefore, the above structure may be a new type of crystal structure that is not found in a general lithium-rich (Li-rich) cathode.

In detail, the first mixed structure 21 and the second mixed structure 22 may be observed, upon crystal structure analysis of crystal grains of the cathode active material 300 in a [1, -1, 0] axis direction, as a streak-shaped electron diffraction pattern that does not belong to an R-3m layered crystal structure between electron diffraction dots exhibiting the R-3m layered crystal structure in selected area electron diffraction (SAED). In contrast, the third mixed structure 23 may be observed, upon crystal structure analysis of crystal grains of the cathode active material 300 in a [1, -1, 0] axis direction, as an additional-dot-shaped electron diffraction pattern that does not belong to an R-3m layered crystal structure between electron diffraction dots exhibiting the R-3m layered crystal structure in SAED.

Therefore, a volume variation of a unit cell of the cathode active material 300 may be reduced due to the partially regular mixed structures 21, 22, and 23 provided in the lithium layer 310 or the transition metal layer 320 of the cathode active material 300 upon charging/discharging. In detail, when the cathode active material 300 is charged/discharged at high voltages, the volume variation of the unit cell of the cathode active material 300 may be controlled according to a molar ratio of nickel in the transition metal 304 of the cathode active material 300. For example, when the molar ratio of nickel in the transition metal 304 is greater than 0.8, and less than or equal to 0.9, a volume variation of a unit cell may be less than or equal to 9% upon charging at 4.5 V. For another example, when the molar ratio of nickel in the transition metal 304 is greater than 0.7, and less than or equal to 0.8, the volume variation of the unit cell may be less than or equal to 7% upon the charging at 4.5 V. For still another example, when the molar ratio of nickel in the transition metal 304 is greater than 0.6, and less than or equal to 0.7, the volume variation of the unit cell may be less than or equal to 5% upon the charging at 4.5 V. For yet another example, when the molar ratio of nickel in the transition metal 304 is less than or equal to 0.6, the volume variation of the unit cell may be less than or equal to 4% upon the charging at 4.5 V. For still yet another example, when the molar ratio of nickel in the transition metal 304 is less than or equal to 0.6, the volume variation of the unit cell may be less than or equal to 6% upon the charging at 4.7 V. Accordingly, the cathode active material 300 may maintain a stable crystal structure under high-voltage conditions due to the partially regular mixed structures 21, 22, and 23 provided in the lithium layer 310 or the transition metal layer 320 of the cathode active material 300. Therefore, upon charging/discharging under high-voltage conditions, the crystal structure of the cathode active material 300 may be prevented from being subjected to a phase transition to H2/H3. For example, when the molar ratio of nickel in the transition metal 304 of the cathode active material 300 is controlled to be less than or equal to 0.5, the crystal structure of the cathode active material 300 may be prevented from being subjected to a phase transition to H2/H3 upon charging at 4.8 V or more.

In addition, the cathode active material 300 may have stability under high-temperature conditions due to the partially regular mixed structures 21, 22, and 23 provided in the lithium layer 310 or the transition metal layer 320 of the cathode active material 300. For example, when the molar ratio of nickel in the transition metal 304 of the cathode active material 300 is controlled to be less than or equal to 0.5, heat may be generated at 225 °C or more upon charging at 4.5 V.

In summary, the stability of the crystal structure of the cathode active material 300 may be improved under the high-voltage and high-temperature conditions due to the partially regular mixed structures 21, 22, and 23 provided in the lithium layer 310 or the transition metal layer 320 of the cathode active material 300.

In conclusion, the cathode active material 300 according to the embodiment of the present disclosure may include the lithium 302, the transition metal 304, and the oxygen. In addition, the cathode active material 300 may include a layered crystal structure in which the lithium layer 310 including the lithium 302 and the transition metal layer 320 including the transition metal 304 are alternately and repeatedly arranged. In addition, the partially regular mixed structure in which the lithium 302 and the transition metal 304 are mixed may be provided in the lithium layer 310 or the transition metal layer 320 of the cathode active material 300. Accordingly, a cathode active material 300 in which stability of a crystal structure is improved under high-voltage and high-temperature conditions may be provided.

Therefore, when the cathode active material 300 is applied to a lithium secondary battery, due to the partially regular mixed structure of the cathode active material 300, the lithium secondary battery may have an improved initial capacity and improved stability for long-term charge/discharge cycles under high-voltage and high-temperature conditions.

In addition, the cathode active material 300 may be applied to a cathode of an all-solid-state battery. The all-solid-state battery may include: the cathode including the cathode active material 300; an anode spaced apart from the cathode and including an anode active material; and a solid electrolyte disposed between the cathode and the anode. For example, the anode active material may be one of a carbon-based material, metal oxide, a lithium metal, a lithium alloy, a silicon-based alloy, or a tin-based alloy. For example, the solid electrolyte may be one of a polyethylene-based solid electrolyte, a polypropylene-based solid electrolyte, a polyester-based solid electrolyte, a polyvinyl-based solid electrolyte, a sulfide-based solid electrolyte, or an oxide-based solid electrolyte.

The cathode active material 300 may be directly applied to the cathode of the all-solid-state battery, or may be applied such that a current collector of the cathode is coated with the cathode active material 300.

When the cathode active material 300 is applied to the cathode of the all-solid-state battery, due to the partially regular mixed structure of the cathode active material 300, collapse of a surface structure of the cathode active material 300 may be minimized during charge/discharge cycles. Accordingly, a lifespan and a rate determining characteristic of the all-solid-state battery may be improved. In addition, due to the partially regular mixed structure of the cathode active material 300, a volume variation of the cathode active material 300 may be minimized during the charge/discharge cycles, so that continuous contact between the cathode active material 300 and the solid electrolyte may be maintained. Accordingly, a problem of a conventional all-solid-state battery, which is collapse of a surface structure of a cathode active material caused by a chemical reaction between a cathode active material and a solid electrolyte during charge/discharge cycles, may be overcome.

Hereinafter, cathode active materials according to experimental examples and comparative examples were manufactured as shown in <Table 1> below by the method for manufacturing the cathode active material according to the embodiment of the present invention.

**[Table 1]**

| Classification | Composition ratio of transition metals in transition metal source | Coprecipitation synthesis conditions | | Presence or absence of partially regular mixed structure in cathode active material |
|---|---|---|---|---|
| | | pH | Molar ratio of ammonia chelating agent : transition metal source | |
| Experimental Example 1 | NCM401248 | 11.0 - 11.3 | 1.0 | O |
| Experimental Example 2 | NCM451144 | 11.0 - 11.3 | 1.0 | O |
| Experimental Example 3 | NCM452233 | 11.0 - 11.3 | 1.0 | O |
| Experimental Example 4 | NCM452827 | 11.0 - 11.3 | 1.0 | X |
| Experimental Example 5 | NCM500842 | 11.0 - 11.3 | 1.0 | O |
| Experimental Example 6 | NCM501436 | 11.0 - 11.3 | 1.0 | O |
| Experimental Example 7 | NCM502030 | 11.0 - 11.3 | 1.0 | X |
| Experimental Example 8 | NM3466 | 10.7 - 11.0 | 1.0 | O |
| Experimental Example 9 | NM9010 | 11.3 - 11.6 | 1.3 | O |
| Experimental Example 10 | NCM900505 | 11.3 - 11.6 | 1.3 | X |
| Experimental Example 11 | NM8020 | 11.3 - 11.6 | 1.3 | O |
| Experimental Example 12 | NCM801010 | 11.3 - 11.6 | 1.3 | X |
| Experimental Example 13 | NM7030 | 11.3 - 11.6 | 1.3 | O |
| Experimental Example 14 | NCM700525 | 11.3 - 11.6 | 1.3 | O |
| Experimental Example 15 | NCM701515 | 11.3 - 11.6 | 1.3 | X |
| Comparative Example 1 | NCM502030 | 11.0 - 11.3 | 1.0 | X |
| Comparative Example 2-1 | NM3565 | 10.7 - 11.0 | 0.7 | X |
| Comparative Example 2-2 | NCM451144 | 10.7 - 10.9 | 0.8 | X |

A half-cell to which the cathode active materials according to the experimental examples described below are applied refers to a half-cell of a lithium secondary battery, and in order to be distinguished from the above half-cell, a half-cell of an all-solid-state battery to which the cathode active materials according to the experimental examples are applied has been described as an all-solid-state battery (half-cell).

Table 2 is a table for analyzing a chemical composition of a cathode active material according to Experimental Example 1 of the present invention.

Referring to Table 2, a cathode to which the cathode active material according to Experimental Example 1 is applied was analyzed for Li, Ni, Co, and Mn elements by ICP-OES.

As shown in Table 2, it may be found that manufacture was performed such that a composition ratio of a transition metal in the cathode active material according to Experimental Example 1 is substantially identical to a target transition metal composition ratio. In addition, it may be found that a composition ratio of Li in the cathode active material according to Experimental Example 1 is 1.01, unlike a composition ratio of Li (1.15 to 1.20) of a general lithium-rich (Li-rich) cathode active material.

**[Table 2]**

| Cathode | Li (at%) | Ni (at%) | Co (at%) | Mn (at%) | Chemical composition |
|---|---|---|---|---|---|
| NCM401248 | 101% | 40.1% | 12.2% | 47.7% | Li_{1.01}[Ni_{0.401}Co_{0.122}Mn_{0.477}]O₂ |

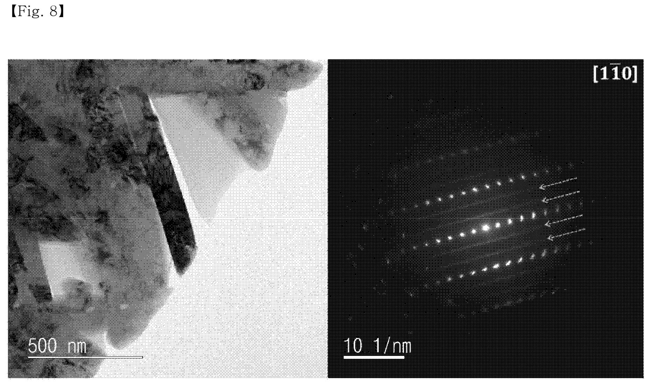

FIGS. 8 to 11 are photographs for describing a crystal structure of a cathode active material according to Experimental Example 1 of the present invention.

Referring to FIG. 8, the cathode active material according to Experimental Example 1 was photographed by TEM (left photo), and the cathode active material according to Experimental Example 1 was analyzed by selected area electron diffraction (SAED) in a [1, -1, 0] axis direction (right photo).

As shown in FIG. 8, it may be found that streak-shaped electron diffraction patterns (indicated by a dotted arrow) corresponding to a first partially regular mixed structure and a second partially regular mixed structure were observed in the cathode active material according to Experimental Example 1.

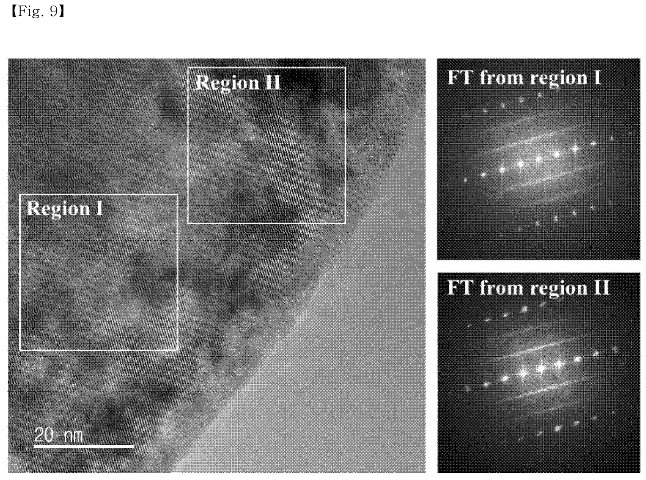

Referring to FIG. 9, the cathode active material according to Experimental Example 1 was photographed by TEM (high magnification) (left photo), and Region 1 (25 nm x 25 nm) and Region 2 (25 nm x 25 nm) indicated on the photograph were analyzed by Fourier transform (FT) (right photo).

As shown in FIG. 9, it may be found that upon FT analysis of the cathode active material according to Experimental Example 1, as in the SAED analysis result, streak-shaped electron diffraction patterns corresponding to the first partially regular mixed structure and the second partially regular mixed structure were observed in Region 1 and Region 2. In addition, the observation of the above crystal structure in the 25 nm x 25 nm region may mean that the partially regular mixed structure is locally distributed in a nano region within the cathode active material.

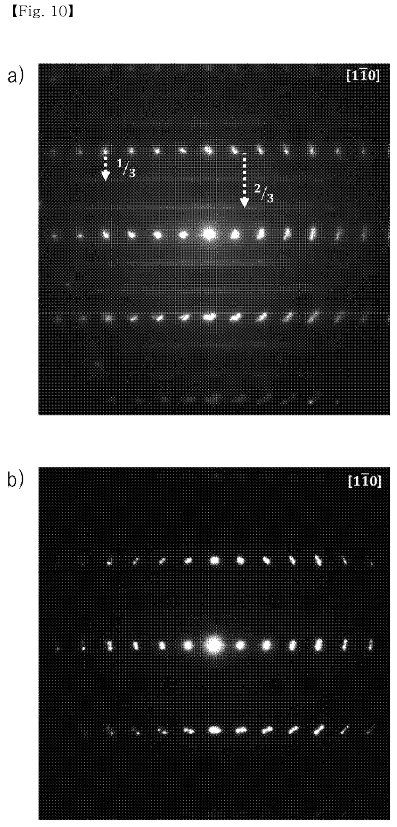

Referring to (a) of FIG. 10, the cathode active material according to Experimental Example 1 was analyzed by SAED in the [1, -1, 0] axis direction, and referring to (b) of FIG. 10, a cathode active material according to Comparative Example 1 was analyzed by SAED in the [1, -1, 0] axis direction.

As shown in (a) and (b) of FIG. 10, it may be found that the streak-shaped electron diffraction patterns corresponding to the first partially regular mixed structure and the second partially regular mixed structure were observed at positions that are 1/3 and 2/3 of a distance between a spot-shaped electron diffraction pattern corresponding to an R-3m layered crystal structure of the cathode active material according to Experimental Example 1 and a spot-shaped electron diffraction pattern corresponding to an adjacent R-3m layered crystal structure. The reason why the electron diffraction pattern that does not correspond to the R-3m layered crystal structure appear at the 1/3 and 2/3 positions is that a cycle in which a transition metal and lithium are arranged in a transition metal layer or a lithium layer is 1:2 or 2:1, and the reason why an additional-streak-shaped electron diffraction pattern that does not belong to the R-3m layered crystal structure are formed is that a partially regular mixed region is very small, which is a phenomenon caused by a shape factor. In contrast, it may be found that only a spot-shaped electron diffraction pattern corresponding to the R-3m layered crystal structure was observed in the cathode active material according to Comparative Example 1.

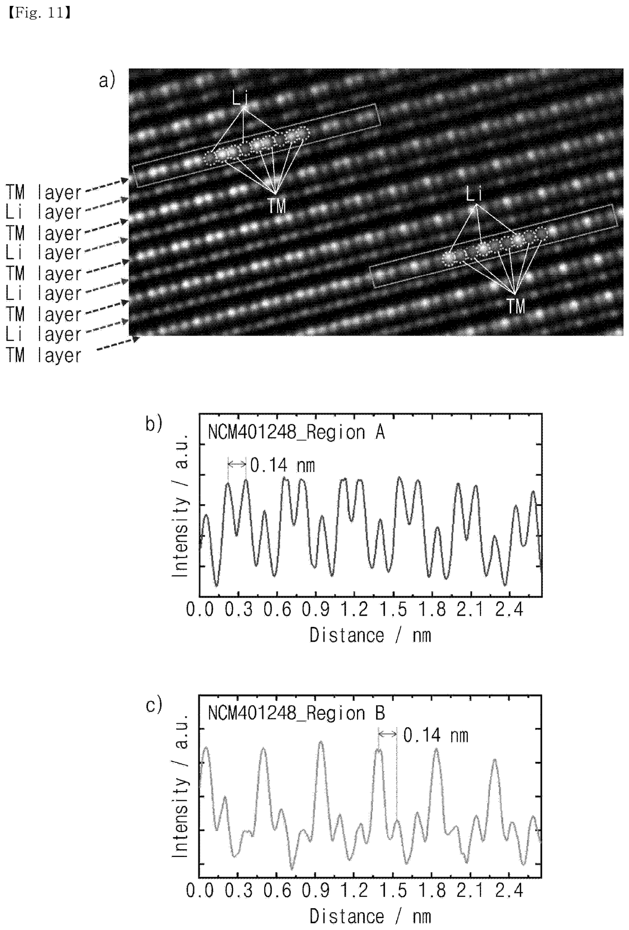

Referring to (a) of FIG. 11, an arrangement of lithium Li and a transition metal TM in a crystal structure of the cathode active material according to Experimental Example 1 was analyzed by TEM, referring to (b) of FIG. 11, sensitivity according to a distance was measured for a first unit arrangement (Region A) of the cathode active material according to Experimental Example 1, and referring to (c) of FIG. 11, sensitivity according to a distance was measured for a second unit arrangement (Region B) of the cathode active material according to Experimental Example 1.

As shown in (a) and (b) of FIG. 11, it may be found that the cathode active material according to Experimental Example 1 is configured such that the first partially regular mixed structure including the first unit arrangement in which the transition metal TM is consecutively arranged twice and the lithium Li is arranged once is provided in the lithium layer or the transition metal layer. In addition, it may be found that a distance between atoms constituting the first unit arrangement is about 0.14 nm.

As shown in (a) and (c) of FIG. 11, it may be found that the cathode active material according to Experimental Example 1 is configured such that the second partially regular mixed structure including the second unit arrangement in which the lithium Li is consecutively arranged twice and the transition metal TM is arranged once is provided in the lithium layer or the transition metal layer. In addition, it may be found that a distance between atoms constituting the second unit arrangement is about 0.14 nm.

Table 3 is a table for describing characteristics for an initial capacity and charge/discharge cycles of a half-cell to which the cathode active material according to Experimental Example 1 of the present invention is applied.

Referring to Table 3, a capacity retention rate for the initial capacity and 100 charge/discharge cycles was measured for the half-cell to which the cathode active material according to Experimental Example 1 is applied under test conditions of Table 3.

As shown in Table 3, it may be found that under conditions of 3.0 V to 4.3 V and 30 °C, the half-cell to which the cathode active material according to Experimental Example 1 is applied exhibits an initial capacity of 161.7 mAh/g and a capacity retention rate of 99.1% based on 4.3 V (cut-off).

It may be found that under conditions of 3.0 V to 4.5 V and 30 °C, the half-cell to which the cathode active material according to Experimental Example 1 is applied exhibits an initial capacity of 200.1 mAh/g and a capacity retention rate of 96.8% based on 4.5 V (cut-off).

It may be found that under conditions of 3.0 V to 4.5 V and 45 °C, the half-cell to which the cathode active material according to Experimental Example 1 is applied exhibits an initial capacity of 204.9 mAh/g and a capacity retention rate of 98.8% based on 4.5 V (cut-off).

It may be found that under conditions of 3.0 V to 4.6 V and 45 °C, the half-cell to which the cathode active material according to Experimental Example 1 is applied exhibits an initial capacity of 217.5 mAh/g and a capacity retention rate of 98.1% based on 4.6 V (cut-off).

Therefore, it may be found that the half-cell to which the cathode active material according to Experimental Example 1 is applied has an excellent initial capacity and excellent stability for charge/discharge cycles under high-voltage and high-temperature charge/discharge conditions, since the first partially regular mixed structure and the second partially regular mixed structure are provided in the lithium layer and the transition metal layer of the cathode active material according to Experimental Example 1.

**[Table 3]**

| Test condition | Cathod e | Uniqu e nanoc ompos ite struc ture | 0.1C charg e capad ity (mAh/ g) | 0.1C disch arge capac ity (mAh/ g) | 1st effic iency (%) | 0.5C discha rge capaci ty (mAh/g ) | 0.5C/ 0.1C | No. of cyc les | Cycle reten tion |
|---|---|---|---|---|---|---|---|---|---|
| 3.0-4.3V, 30°C | NCM 401248 | O | 170.0 | 161.7 | 95.1% | 144.7 | 89.5% | 100 | 9.1% |
| 3.0-4.5V, 30°C | | | 213.6 | 200.1 | 93.7% | 184.2 | 92.1% | 100 | 6.8% |
| 3.0-4.5V, 45°C | | | 212.7 | 204.9 | 96.3% | 192.1 | 93.8% | 100 | 98.8% |
| 3.0-4.6V, 45°C | | | 230.4 | 217.5 | 94.4% | 212.1 | 97.5% | 100 | 8.1% |

Table 4 is a table for comparing a volume variation of a unit cell according to a charging voltage for the cathode active material according to Experimental Example 1 of the present invention.

Referring to Table 4, when the cathode to which the cathode active material according to Experimental Example 1 is applied is charged according to the charging voltages of Table 4, the volume variation of the unit cell in the cathode active material according to Experimental Example 1 was analyzed by in-situ XRD.

As shown in Table 4, it may be found that when the cathode to which the cathode active material according to Experimental Example 1 is applied is charged at 4.3 V, the volume variation of the unit cell of the cathode active material according to Experimental Example 1 is 1.64%.

It may be found that when the cathode to which the cathode active material according to Experimental Example 1 is applied is charged at 4.5 V, the volume variation of the unit cell of the cathode active material according to Experimental Example 1 is 2.17%.

It may be found that when the cathode to which the cathode active material according to Experimental Example 1 is applied is charged at 4.7 V, the volume variation of the unit cell of the cathode active material according to Experimental Example 1 is 3.25%.

Therefore, it may be found that since the first partially regular mixed structure and the second partially regular mixed structure are provided in the lithium layer and the transition metal layer of the cathode active material according to Experimental Example 1, the volume variation of the unit cell of the cathode active material according to Experimental Example 1 is minimized even upon charging at high voltages. In other words, it may be found that the cathode active material according to Experimental Example 1 has a stable crystal structure. Accordingly, as described above, it may be found that the half-cell to which the cathode active material according to Experimental Example 1 is applied has an excellent initial capacity and excellent stability for charge/discharge cycles under high-voltage and high-temperature charge/discharge conditions.

**[Table 4]**

| Cathode | Unique nanocomposite structure | Unit cell volume variation (%) | | | | | | |
|---|---|---|---|---|---|---|---|---|
| | | 3.5 V | 3.7 V | 3.9 V | 4.1 V | 4.3 V | 4.5 V | 4.7 V |
| NCM401248 | O | 0% | 0.10% | 0.92% | 1.15% | 1.64% | 2.17% | 3.25% |

Table 5 is a table for analyzing a chemical composition of a cathode active material according to Experimental Example 2 of the present invention.

Referring to Table 5, a cathode to which the cathode active material according to Experimental Example 2 is applied was analyzed for Li, Ni, Co, and Mn elements by ICP-OES.

As shown in Table 5, it may be found that manufacture was performed such that a composition ratio of a transition metal in the cathode active material according to Experimental Example 2 is substantially identical to a target transition metal composition ratio. In addition, it may be found that a composition ratio of Li in the cathode active material according to Experimental Example 2 is 1.01, unlike the composition ratio of Li (1.15 to 1.20) of the general lithium-rich (Li-rich) cathode active material.

**[Table 5]**

| Cathode | Li (at%) | Ni (at%) | Co (at%) | Mn (at%) | Chemical composition |
|---|---|---|---|---|---|
| NCM451144 | 101% | 44.8% | 11.1% | 44.1% | Li_{1.01}[Ni_{0.448}Co_{0.111}Mn_{0.441}]O₂ |

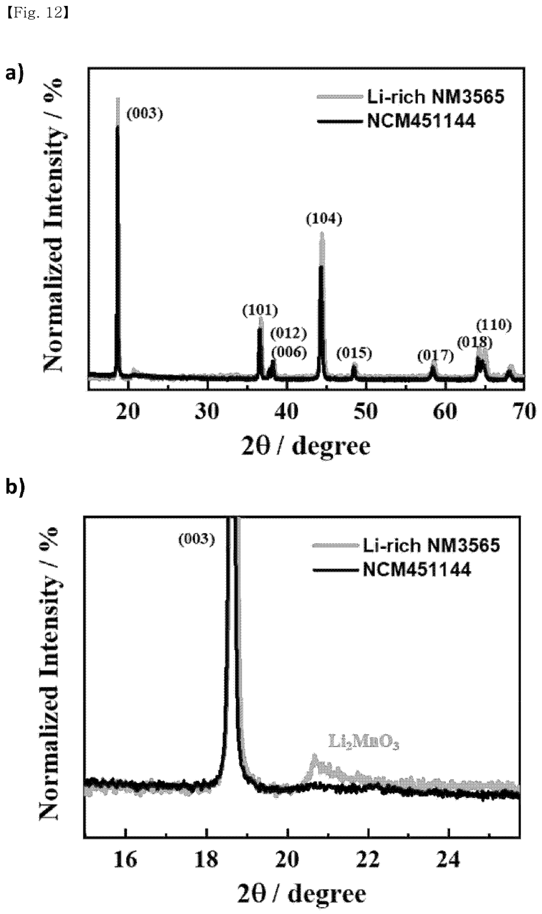

FIG. 12 is a graph for comparing crystal structures of cathode active materials according to Experimental Example 2 and Comparative Example 2-1 of the present invention.

Referring to (a) of FIG. 12, the cathode to which the cathode active material according to Experimental Example 2 (NCM451144) is applied was analyzed by XRD, and referring to (b) of FIG. 12, a cathode to which a lithium-rich (Li-rich) cathode active material (Li-rich NM3565) according to Comparative Example 2-1 is applied was analyzed by XRD.

As shown in (a) and (b) of FIG. 12, it may be found that the Li-rich cathode active material according to Comparative Example 2-1 has a peak corresponding to Li-₂MnO₃. In contrast, it may be found that the cathode active material according to Experimental Example 2 has no peak corresponding to Li-₂MnO₃. Therefore, it may be found that the Li-rich cathode active material according to Comparative Example 2-1 and the cathode active material according to Experimental Example 2 have different crystal structures.

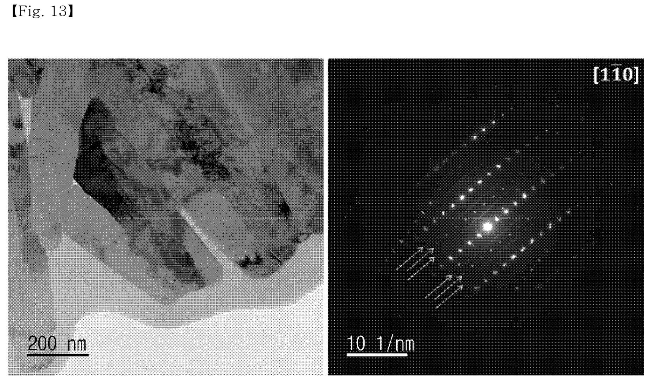

FIGS. 13 to 15 are photographs for describing the crystal structure of the cathode active material according to Experimental Example 2 of the present invention.

Referring to FIG. 13, the cathode active material according to Experimental Example 2 was photographed by TEM (left photo), and the cathode active material according to Experimental Example 2 was analyzed by SAED in the [1, -1, 0] axis direction (right photo).

As shown in FIG. 13, it may be found that electron diffraction patterns corresponding to a first partially regular mixed structure, a second partially regular mixed structure, and a third partially regular mixed structure were observed in the cathode active material according to Experimental Example 2.

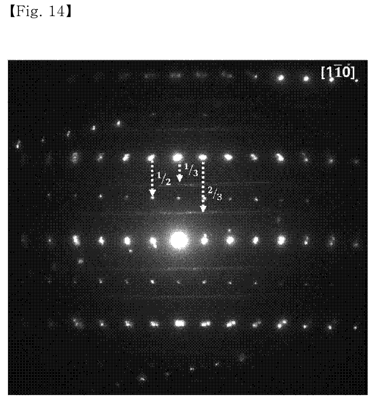

Referring to FIG. 14, the cathode active material according to Experimental Example 2 was analyzed by SAED in the [1, -1, 0] axis direction.

As shown in FIG. 14, it may be found that the streak-shaped electron diffraction patterns corresponding to the first partially regular mixed structure and the second partially regular mixed structure were observed at positions that are 1/3 and 2/3 of a distance between a relatively-large-spot-shaped electron diffraction pattern corresponding to an R-3m layered crystal structure of the cathode active material according to Experimental Example 2 and a relatively-large-spot-shaped electron diffraction pattern corresponding to an adjacent R-3m layered crystal structure. In addition, it may be found that a relatively-small-spot-shaped electron diffraction pattern corresponding to the third partially regular mixed structure was observed at a position that is 1/2 of the distance.

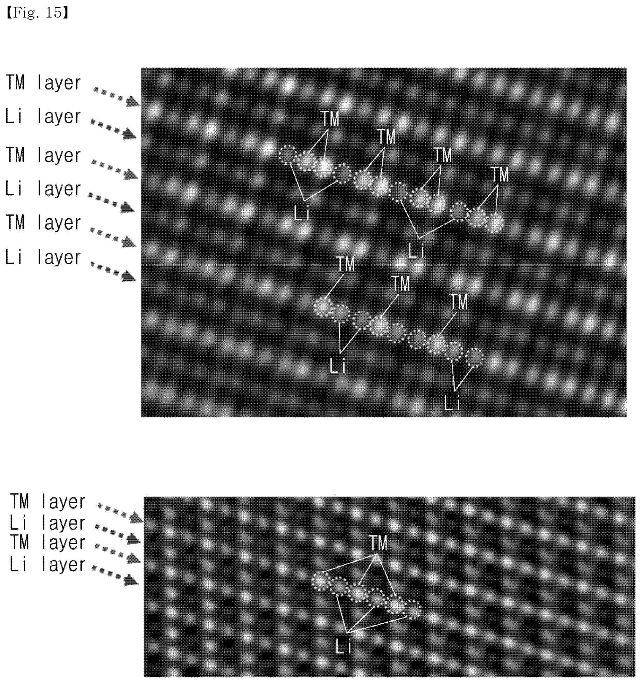

Referring to FIG. 15, an arrangement of lithium Li and a transition metal TM in a crystal structure of the cathode active material according to Experimental Example 2 was analyzed by TEM.

As shown in FIG. 15, it may be found that the cathode active material according to Experimental Example 2 is configured such that the first partially regular mixed structure including the first unit arrangement in which the transition metal TM is consecutively arranged twice and the lithium Li is arranged once is provided in the lithium layer or the transition metal layer.

In addition, it may be found that the cathode active material according to Experimental Example 2 is configured such that the second partially regular mixed structure including the second unit arrangement in which the lithium Li is consecutively arranged twice and the transition metal TM is arranged once is provided in the lithium layer or the transition metal layer.

In addition, it may be found that the cathode active material according to Experimental Example 2 is configured such that the third partially regular mixed structure in which the transition metal TM and the lithium Li are alternately and repeatedly arranged is provided in the lithium layer or the transition metal layer.

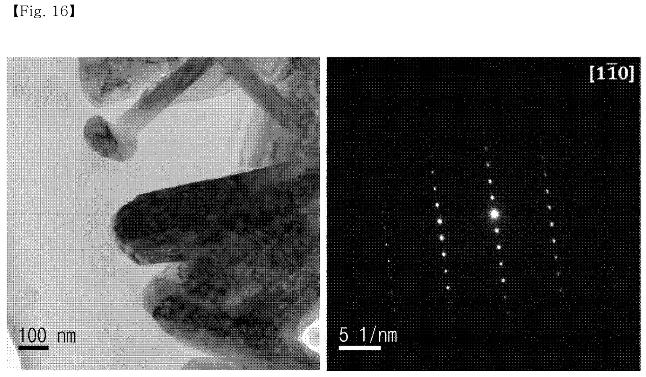

FIG. 16 is a photograph for describing a crystal structure of a cathode active material according to Comparative Example 2-2 of the present invention.

Referring to FIG. 16, a cathode active material according to Comparative Example 2-2 was photographed by TEM (left photo), and the cathode active material according to Comparative Example 2-2 was analyzed by SAED in the [1, -1, 0] axis direction (right photo).

As shown in FIG. 16, it may be fount that an electron diffraction pattern corresponding to a partially regular mixed structure was not observed in the cathode active material according to Comparative Example 2-2, and only a spot-shaped electron diffraction pattern corresponding to an R-3m layered crystal structure was observed.

Although the cathode active material according to Comparative Example 2-2 and the cathode active material according to Experimental Example 2 described above were manufactured by using a transition metal source having the same composition, an electron diffraction pattern corresponding to the partially regular mixed structure was not observed in the cathode active material according to Comparative Example 2-2. The factor of the above configuration may be interpreted to be due to the fact that pH and an input molar ratio of an ammonia chelating agent and a transition metal source in a coprecipitation synthesis step of a method for manufacturing the cathode active material according to Comparative Example 2-2 are different from pH and an input molar ratio of an ammonia chelating agent and a transition metal source in a method for manufacturing the cathode active material according to Experimental Example 2.

Table 6 is a table for comparing a volume variation of a unit cell according to a charging voltage for the cathode active materials according to Experimental Example 2 and Comparative Example 2-2 of the present invention.

Referring to Table 6, when the cathode to which the cathode active material according to Experimental Example 2 is applied is charged according to the charging voltages of Table 6, the volume variation of the unit cell in the cathode active material according to Experimental Example 2 was analyzed by in-situ XRD. In addition, when a cathode to which the cathode active material according to Comparative Example 2-2 is applied is charged according to the charging voltages of Table 6, the volume variation of the unit cell in the cathode active material according to Comparative Example 2-2 was analyzed by in-situ XRD.

As shown in Table 6, it may be found that when the cathode to which the cathode active material according to Experimental Example 2 is applied is charged at 4.3 V, the volume variation of the unit cell of the cathode active material according to Experimental Example 2 is 1.73%. In addition, it may be found that when the cathode to which the cathode active material according to Comparative Example 2 is applied is charged at 4.3 V, the volume variation of the unit cell of the cathode active material according to Comparative Example 2-2 is 1.98%.

It may be found that when the cathode to which the cathode active material according to Experimental Example 2 is applied is charged at 4.5 V, the volume variation of the unit cell of the cathode active material according to Experimental Example 2 is 2.65%. In addition, it may be found that when the cathode to which the cathode active material according to Comparative Example 2-2 is applied is charged at 4.5 V, the volume variation of the unit cell of the cathode active material according to Comparative Example 2-2 is 3.61%.

It may be found that when the cathode to which the cathode active material according to Experimental Example 2 is applied is charged at 4.7 V, the volume variation of the unit cell of the cathode active material according to Experimental Example 2 is 3.69%. In addition, it may be found that when the cathode to which the cathode active material according to Comparative Example 2-2 is applied is charged at 4.7 V, the volume variation of the unit cell of the cathode active material according to Comparative Example 2-2 is 5.64%.

Therefore, it may be found that upon charging at 4.3 V, the volume variations of the unit cells of the cathode active material according to Experimental Example 2 and the cathode active material according to Comparative Example 2-2 are at similar levels, whereas upon charging at 4.5 V and 4.7 V, the volume variation of the unit cell of the cathode active material according to Experimental Example 2 is smaller than the volume variation of the unit cell of the cathode active material according to Comparative Example 2-2. The factor of the above configuration may be interpreted to be due to the fact that the first partially regular mixed structure, the second partially regular mixed structure, and the third partially regular mixed structure are provided in the lithium layer or the transition metal layer of the cathode active material according to Experimental Example 2. Accordingly, it may be found that stability of the crystal structure of the cathode active material according to Experimental Example 2 is improved upon charging at high voltages. Therefore, it may be found that the cathode active material according to Experimental Example 2 has a smaller volume variation of a unit cell than the cathode active material according to Comparative Example 2-2 upon charging at high voltages (4.5 V, 4.7 V).

**[Table 6]**

| Cathode | Unique nanocomposite structure | Unit cell volume variation (%) | | | | | | |
|---|---|---|---|---|---|---|---|---|
| | | 3.5 V | 3.7 V | 3.9 V | 4.1 V | 4.3 V | 4.5 V | 4.7 V |
| NCM451144 | O | 0% | 0.12% | 0.98% | 1.26% | 1.73% | 2.65% | 3.69% |
| NCM451144 (layered) | X | 0% | 0.17% | 1.02% | 1.34% | 1.98% | 3.61% | 5.64% |

Table 7 is a table for comparing characteristics for an initial capacity and charge/discharge cycles of half-cells to which the cathode active materials according to Experimental Example 2 and Comparative Example 2-2 of the present invention are applied.

Referring to Table 7, a capacity retention rate for the initial capacity and charge/discharge cycles was measured for the half-cell to which the cathode active material according to Experimental Example 2 is applied under conditions of Table 7. In addition, the capacity retention rate for the initial capacity and the charge/discharge cycles was measured for the half-cell to which the cathode active material according to Comparative Example 2-2 is applied under the conditions of Table 7.

As shown in Table 7, it may be found that under conditions of 3.0 V to 4.6 V and 45 °C, the half-cell to which the cathode active material according to Experimental Example 2 is applied exhibits an initial capacity of 219.1 mAh/g and a capacity retention rate of 97.6% (100 charge/discharge cycles) based on 4.6 V (cut-off). In addition, it may be found that the half-cell to which the cathode active material according to Comparative Example 2-2 is applied has an initial capacity of 220.7 mAh/g and a capacity retention rate of 77.4% (100 charge/discharge cycles) at 4.6 V (cut-off). In addition, it may be found that under conditions of 3.0 V to 4.5 V and 45 °C, the half-cell to which the cathode active material according to Experimental Example 2 is applied has an initial capacity of 206.8 mAh/g and a capacity retention rate of 82.7% (500 charge/discharge cycles) at 4.5 V (cut-off).

Therefore, it may be found that the half-cell to which the cathode active material according to Experimental Example 2 is applied has better stability for charge/discharge cycles than the half-cell to which the cathode active material according to Comparative Example 2-2 is applied under high-voltage (4.6 V) and high-temperature (45 °C) conditions. The factor of the above configuration may be interpreted to be due to the fact that the stability of the crystal structure is improved as described above, since the first partially regular mixed structure, the second partially regular mixed structure, and the third partially regular mixed structure are provided in the transition metal layer or the lithium layer of the cathode active material according to Experimental Example 2.

**[Table 7]**

| Test condition | Cathod e | Uniqu e nanoc ompos ite struc ture | 0.1C charg e capad ity (mAh/ g) | 0.1C disch arge capac ity (mAh/ g) | 1st effic iency (%) | 0.5C discha rge capaci ty (mAh/g ) | 0.5C/ 0.1C | No. of cyc les | Cycle reten tion |
|---|---|---|---|---|---|---|---|---|---|
| 3.0-4.3V, 30°C | NCM 451144 | O | 174.3 | 166.8 | 95.7% | 152.2 | 91.2% | 100 | 99.5% |
| 3.0-4.5V, 30°C | | | 214.7 | 202.9 | 94.5% | 186.5 | 91.9% | 100 | 96.5% |
| 3.0-4.5V, 45°C | | | 215.2 | 207.4 | 96.4% | 195.2 | 94.1% | 100 | 99.2% |
| | | | 215.7 | 206.8 | 95.9% | 196.2 | 94.9% | 500 | 82.7% |
| 3.0-4.6V, 45 °C | | | 231.1 | 219.1 | 94.8% | 213.8 | 97.6% | 100 | 97.9% |
| 3.0-4.6V, 45 °C | NCM 451144 (layer ed) | X | 230.9 | 220.7 | 95.6% | 213.4 | 96.7% | 100 | 77.4% |

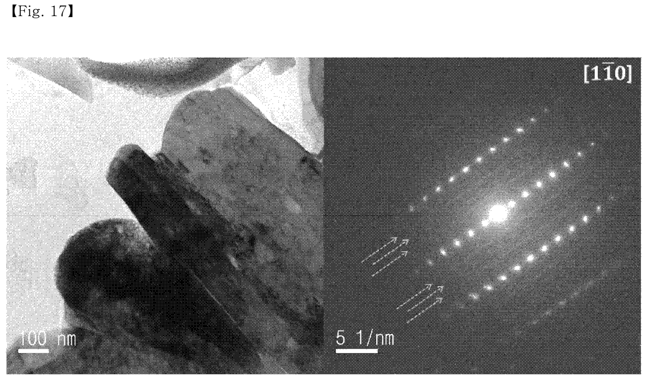

FIG. 17 is a TEM analysis photograph for describing stability for long-term charge/discharge cycles of the cathode active material according to Experimental Example 2 of the present invention.

Referring to FIG. 17, after performing 400 charge/discharge cycles on the half-cell to which the cathode active material according to Experimental Example 2 is applied, the cathode active material according to Experimental Example 2 was photographed by TEM (left photo), and the cathode active material according to Experimental Example 2 was analyzed by SAED in the [1, -1, 0] axis direction (right photo).

As shown in FIG. 17, it may be found that the cathode active material according to Experimental Example 2 is configured such that the first partially regular mixed structure, the second partially regular mixed structure, and the third partially regular mixed structure are maintained in the transition metal layer or the lithium layer even after performing long-term charge/discharge cycles.

Table 8 is a table for analyzing a chemical composition of a cathode active material according to Experimental Example 3 of the present invention.

Referring to Table 8, a cathode to which the cathode active material according to Experimental Example 3 is applied was analyzed for Li, Ni, Co, and Mn elements by ICP-OES.

As shown in Table 8, it may be found that manufacture was performed such that a composition ratio of a transition metal in the cathode active material according to Experimental Example 3 is substantially identical to a target transition metal composition ratio. In addition, it may be found that a composition ratio of Li in the cathode active material according to Experimental Example 3 is 1.01, unlike the composition ratio of Li (1.15 to 1.20) of the general lithium-rich (Li-rich) cathode active material.

**[Table 8]**

| Cathode | Li (at%) | Ni (at%) | Co (at%) | Mn (at%) | Chemical composition |
|---|---|---|---|---|---|
| | | | | | |
| NCM452233 | 101% | 45.1% | 21.8% | 33.1% | Li_{1.01}[Ni_{0.451}CO_{0.218}Mn_{0.331}]O₂ |

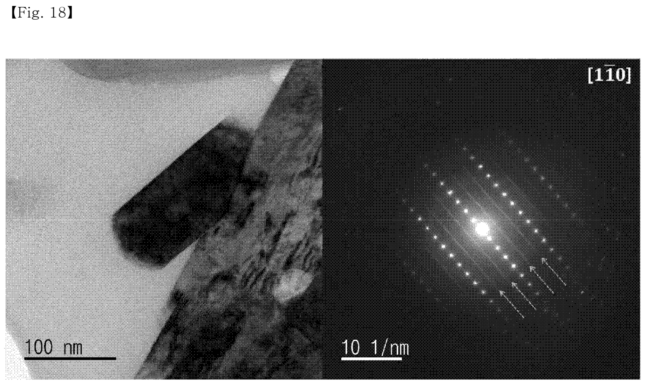

FIG. 18 is a photograph for describing a crystal structure of a cathode active material according to Experimental Example 3 of the present invention.

Referring to FIG. 18, the cathode active material according to Experimental Example 3 was photographed by TEM (left photo), and the cathode active material according to Experimental Example 3 was analyzed by SAED in the [1, -1, 0] axis direction (right photo).

As shown in FIG. 18, it may be found that streak-shaped electron diffraction patterns corresponding to a first partially regular mixed structure and a second partially regular mixed structure were observed in the cathode active material according to Experimental Example 3.

Table 9 is a table for describing characteristics for an initial capacity and charge/discharge cycles of a half-cell to which the cathode active material according to Experimental Example 3 of the present invention is applied.

Referring to Table 9, the initial capacity and a capacity retention rate for 100 charge/discharge cycles were measured for the half-cell to which the cathode active material according to Experimental Example 3 is applied under test conditions of Table 9.

As shown in Table 9, it may be found that under conditions of 3.0 V to 4.3 V and 30 °C, the half-cell to which the cathode active material according to Experimental Example 3 is applied exhibits an initial capacity of 167.2 mAh/g and a capacity retention rate of 98.4% based on 4.3 V (cut-off).

It may be found that under conditions of 3.0 V to 4.5 V and 30 °C, the half-cell to which the cathode active material according to Experimental Example 3 is applied exhibits an initial capacity of 203.1 mAh/g and a capacity retention rate of 95.5% based on 4.5 V (cut-off).

It may be found that under conditions of 3.0 V to 4.5 V and 45 °C, the half-cell to which the cathode active material according to Experimental Example 3 is applied exhibits an initial capacity of 207.5 mAh/g and a capacity retention rate of 97.5% based on 4.5 V (cut-off).

It may be found that under conditions of 3.0 V to 4.6 V and 45 °C, the half-cell to which the cathode active material according to Experimental Example 3 is applied exhibits an initial capacity of 217.1 mAh/g and a capacity retention rate of 93.7% based on 4.6 V (cut-off).

Therefore, it may be found that the half-cell to which the cathode active material according to Experimental Example 3 is applied has an excellent initial capacity and excellent stability for charge/discharge cycles under high-voltage and high-temperature charge/discharge conditions, since the first partially regular mixed structure and the second partially regular mixed structure are provided in the lithium layer or the transition metal layer of the cathode active material according to Experimental Example 3.

**[Table 9]**

| Test condition | Cathod e | Unique nanoco mposit e struct ure | 0.1C charg e capad ity (mAh/ g) | 0.1C disch arge capac ity (mAh/ g) | 1st effic iency (%) | 0.5C disch arge capac ity (mAh/ g) | 0.5C/ 0.1C | No. of cyc les | Cycle reten tion |
|---|---|---|---|---|---|---|---|---|---|
| 3.0-4.3V, 30°C | NCM 452233 | O | 175.1 | 167.2 | 95.5% | 153.1 | 91.6% | 100 | 98.4% |
| 3.0-4.5V, 30°C | | | 214.5 | 203.1 | 94.7% | 186.9 | 92.0% | 100 | 95.5% |
| 3.0-4.5V, 45°C | | | 215.4 | 207.5 | 96.3% | 196.1 | 94.5% | 100 | 97.5% |
| 3.0-4.6V, 45°C | | | 228.3 | 217.1 | 95.1% | 210.9 | 97.1% | 100 | 93.7% |

Table 10 is a table for analyzing a chemical composition of a cathode active material according to Experimental Example 4 of the present invention.

Referring to Table 10, a cathode to which the cathode active material according to Experimental Example 4 is applied was analyzed for Li, Ni, Co, and Mn elements by ICP-OES.

As shown in Table 10, it may be found that manufacture was performed such that a composition ratio of a transition metal in the cathode active material according to Experimental Example 4 is substantially identical to a target transition metal composition ratio. In addition, it may be found that a composition ratio of Li in the cathode active material according to Experimental Example 4 is 1.01, unlike the composition ratio of Li (1.15 to 1.20) of the general lithium-rich (Li-rich) cathode active material.

**[Table 10]**

| Cathode | Li (at%) | Ni (at%) | Co (at%) | Mn (at%) | Chemical composition |
|---|---|---|---|---|---|
| NCM452827 | 101% | 45.0% | 28.3% | 26.7% | Li_{1.01}[N_{i0.450}CO_{0.283}Mn_{0.267}]O₂ |

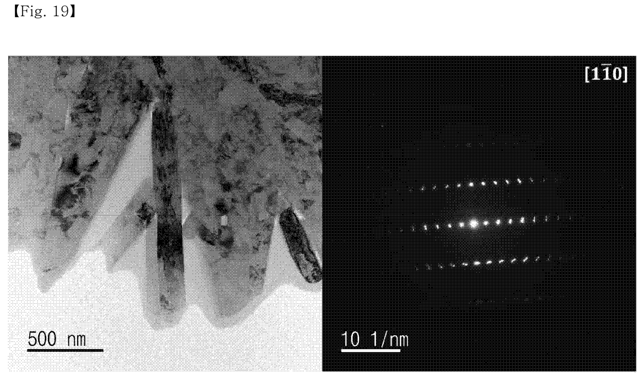

FIG. 19 is a photograph for describing a crystal structure of a cathode active material according to Experimental Example 4 of the present invention.

Referring to FIG. 19, the cathode active material according to Experimental Example 4 was photographed by TEM (left photo), and the cathode active material according to Experimental Example 4 was analyzed by SAED in the [1, -1, 0] axis direction (right photo).

As shown in FIG. 19, it may be found that an electron diffraction pattern corresponding to a partially regular mixed structure was not observed in the cathode active material according to Experimental Example 4, and only a spot-shaped electron diffraction pattern corresponding to an R-3m layered crystal structure was observed.

Table 11 is a table for comparing a volume variation of a unit cell according to a charging voltage for the cathode active material according to Experimental Example 4 of the present invention.

Referring to Table 11, when the cathode to which the cathode active material according to Experimental Example 4 is applied is charged according to the charging voltages of Table 11, the volume variation of the unit cell in the cathode active material according to Experimental Example 4 was analyzed by in-situ XRD.

As shown in Table 11, it may be found that when the cathode to which the cathode active material according to Experimental Example 4 is applied is charged at 4.3 V, the volume variation of the unit cell of the cathode active material according to Experimental Example 1 is 2.60%.

It may be found that when the cathode to which the cathode active material according to Experimental Example 4 is applied is charged at 4.5 V, the volume variation of the unit cell of the cathode active material according to Experimental Example 4 is 4.43%.

It may be found that when the cathode to which the cathode active material according to Experimental Example 4 is applied is charged at 4.7 V, the volume variation of the unit cell of the cathode active material according to Experimental Example 4 is 5.76%.

**[Table 11]**

| Cathode | Unique nanocomposite structure | Unit cell volume variation (%) | | | | | | |
|---|---|---|---|---|---|---|---|---|
| | | 3.5 V | 3.7 V | 3.9 V | 4.1 V | 4.3 V | 4.5 V | 4.7 V |
| NCM452827 | X | 0% | 0.39% | 1.26% | 1.88% | 2.60% | 4.43% | 5.76% |

Table 12 is a table for describing characteristics for an initial capacity and charge/discharge cycles of a half-cell to which the cathode active material according to Experimental Example 4 of the present invention is applied.

Referring to Table 12, the initial capacity and a capacity retention rate for 100 charge/discharge cycles were measured for the half-cell to which the cathode active material according to Experimental Example 4 is applied under test conditions of Table 12.

As shown in Table 12, it may be found that under conditions of 3.0 V to 4.3 V and 30 °C, the half-cell to which the cathode active material according to Experimental Example 4 is applied exhibits an initial capacity of 166.7 mAh/g and a capacity retention rate of 92.1% based on 4.3 V (cut-off).

It may be found that under conditions of 3.0 V to 4.5 V and 30 °C, the half-cell to which the cathode active material according to Experimental Example 4 is applied exhibits an initial capacity of 204.1 mAh/g and a capacity retention rate of 85.2% based on 4.5 V (cut-off).

It may be found that under conditions of 3.0 V to 4.5 V and 45 °C, the half-cell to which the cathode active material according to Experimental Example 4 is applied exhibits an initial capacity of 205.9 mAh/g and a capacity retention rate of 81.3% based on 4.5 V (cut-off).

It may be found that under conditions of 3.0 V to 4.6 V and 45 °C, the half-cell to which the cathode active material according to Experimental Example 4 is applied exhibits an initial capacity of 215.2 mAh/g and a capacity retention rate of 74.9% based on 4.6 V (cut-off).

**[Table 12]**

| Test condition | Cathod e | Uniqu e nanoc ompos ite struc ture | 0.1C charg e capad ity (mAh/ g) | 0.1C disch arge capac ity (mAh/ g) | 1st effic iency (%) | 0.5C disch arge capac ity (mAh/ g) | 0.5C/ 0.1C | No. of cyc les | Cycle reten tion |
|---|---|---|---|---|---|---|---|---|---|
| 3.0-4.3V, 30°C | NCM 452827 | X | 174.2 | 166.7 | 95.7% | 155.2 | 93.1% | 100 | 92.1% |
| 3.0-4.5V, 30°C | | | 214.6 | 204.1 | 95.1% | 188.7 | 92.5% | 100 | 85.2% |
| 3.0-4.5V, 45°C | | | 213.6 | 205.9 | 96.4% | 196.9 | 95.6% | 100 | 81.3% |
| 3.0-4.6V, 45 °C | | | 226.8 | 215.2 | 94.9% | 207.9 | 96.6% | 100 | 74.9% |

Table 13 is a table for comparing thermal stability of the cathode active materials according to Experimental Example 2 and Experimental Example 4 of the present invention.

Referring to Table 13, the cathode to which the cathode active material according to Experimental Example 2 (NCM451144) is applied was charged at 4.5 V, and the thermal stability of the cathode active material according to Experimental Example 2 (NCM451144) was analyzed by differential scanning calorimetry (DSC). In addition, the cathode to which the cathode active material according to Experimental Example 4 (NCM452827) is applied was charged at 4.5 V, and the thermal stability of the cathode active material according to Experimental Example 4 (NCM452827) was analyzed by DSC.

As shown in Table 13, a heat generation initiation temperature of the cathode active material according to Experimental Example 2 is 243.1 °C, and a heat generation initiation temperature of the cathode active material according to Experimental Example 4 is 221.9 °C.

Therefore, it may be found that the cathode active material according to Experimental Example 2 has better thermal safety than the cathode active material according to Experimental Example 4. The factor of the above configuration may be interpreted to be due to the fact that the first partially regular mixed structure and the second partially regular mixed structure are provided in the transition metal layer or the lithium layer of the cathode active material according to Experimental Example 2.

**[Table 13]**

| Cathode | Unique nanocomposite structurestructure | Cut-off voltage | Onset Temp. (°C) | Peak Temp. (°C) | Enthalpy (Jg⁻¹) |
|---|---|---|---|---|---|
| NCM451144 | O | 4.5 V | 243.1 | 247.7 | 1867 |
| NCM452827 | X | | 221.9 | 225.4 | 2961 |

Table 14 is a table for comparing characteristics for an initial capacity and charge/discharge cycles of half-cells to which the cathode active materials according to Experimental Examples 2 to 4 of the present invention are applied.

Referring to Table 14, characteristic results of the initial capacity and the charge/discharge cycles of the half-cell to which the cathode active material according to Experimental Example 2 (NCM451144) described above is applied, characteristic results of the initial capacity and the charge/discharge cycles of the half-cell to which the cathode active material according to Experimental Example 3 (NCM452233) described above is applied, and characteristic results of the initial capacity and the charge/discharge cycles of the half-cell to which the cathode active material according to Experimental Example 4 (NCM452827) described above is applied were integrated and organized into a table.

As shown in Table 14, it may be found that the half-cell to which the cathode active material according to Experimental Example 4 described above is applied has a lower initial capacity and a significantly lower capacity retention rate for charge/discharge cycles than the half-cells to which the cathode active materials according to Experimental Examples 2 and 3 described above are applied under high-voltage (4.5 V, 4.6 V) and high-temperature (45 °C) conditions. The factor of the above configuration may be interpreted to be due to the fact that a partially regular mixed structure is not provided in the transition metal layer or the lithium layer of the cathode active material according to Experimental Example 4.

In addition, the factor of absence of the partially regular mixed structure in the cathode active material according to Experimental Example 4 may be interpreted to be due to the fact that in a process of preparing the cathode active material according to Experimental Example 4, a content of Mn in a transition metal source according to Experimental Example 4 is lower than a content of Mn in each of transition metal sources according to Experimental Examples 2 and 3. Accordingly, it may be found that in a process of preparing the cathode active material according to the embodiment of the present invention, when at% of Ni in the transition metal source is controlled to 45%, at% of Mn has to be controlled to be greater than or equal to 30%.

**[Table 14]**

| Test condition | Cathode | Uniqu e nanoc ompos ite struc ture | 0.1C charg e capad ity(mAh/ g) | 0.1C disch arge capac ity(mAh/ g) | 1st effic iency (%) | 0.5C disch arge capac ity(mAh/ g) | 0.5C/ 0.1C | No. of cyc les | Cycle reten tion |
|---|---|---|---|---|---|---|---|---|---|
| 3.0-4.3V, 30°C | NCM451144 | O | 174.3 | 166.8 | 95.7% | 152.2 | 91.2% | 100 | 99.5% |
| | NCM452233 | O | 175.1 | 167.2 | 95.5% | 153.1 | 91.6% | 100 | 98.4% |
| | NCM452827 | X | 174.2 | 166.7 | 95.7% | 155.2 | 93.1% | 100 | 92.1% |
| 3.0-4.5V, 30°C | NCM451144 | O | 214.7 | 202.9 | 94.5% | 186.5 | 91.9% | 100 | 96.5% |
| | NCM452233 | O | 214.5 | 203.1 | 94.7% | 186.9 | 92.0% | 100 | 95.5% |
| | NCM452827 | X | 214.6 | 204.1 | 95.1% | 188.7 | 92.5% | 100 | 85.2% |
| 3.0-4.5V, 45°C | NCM451144 | O | 215.2 | 207.4 | 96.4% | 195.2 | 94.1% | 100 | 99.2% |
| | NCM452233 | O | 215.4 | 207.5 | 96.3% | 196.1 | 94.5% | 100 | 97.5% |
| | NCM452827 | X | 213.6 | 205.9 | 96.4% | 196.9 | 95.6% | 100 | 81.3% |
| 3.0-4.6V, 45 °C | NCM451144 | O | 231.1 | 219.1 | 94.8% | 213.8 | 97.6% | 100 | 97.9% |
| | NCM452233 | O | 228.3 | 217.1 | 95.1% | 210.9 | 97.1% | 100 | 93.7% |
| | NCM452827 | X | 226.8 | 215.2 | 94.9% | 207.9 | 96.6% | 100 | 74.9% |

Table 15 is a table for analyzing a chemical composition of a cathode active material according to Experimental Example 5 of the present invention.

Referring to Table 15, a cathode to which the cathode active material according to Experimental Example 5 is applied was analyzed for Li, Ni, Co, and Mn elements by ICP-OES.

As shown in Table 15, it may be found that manufacture was performed such that a composition ratio of a transition metal in the cathode active material according to Experimental Example 5 is substantially identical to a target transition metal composition ratio. In addition, it may be found that a composition ratio of Li in the cathode active material according to Experimental Example 5 is 1.01, unlike the composition ratio of Li (1.15 to 1.20) of the general lithium-rich (Li-rich) cathode active material.

**[Table 15]**

| Cathode | Li (at%) | Ni (at%) | Co (at%) | Mn (at%) | Chemical composition |
|---|---|---|---|---|---|
| NCM500842 | 101% | 50.2% | 7.9% | 41.9% | Li_{1.01}[Ni_{0.502}CO_{0.079}Mn_{0.419}]O₂ |

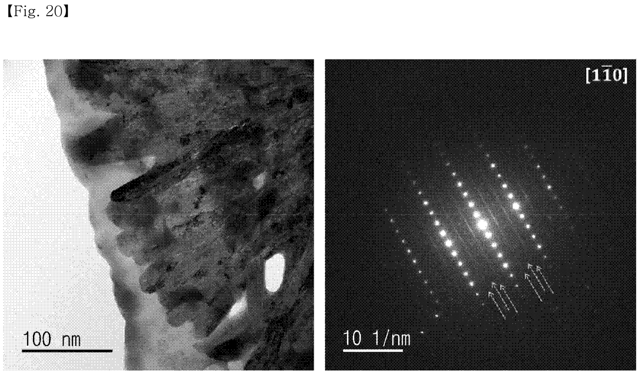

FIG. 20 is a photograph for describing a crystal structure of a cathode active material according to Experimental Example 5 of the present invention.

Referring to FIG. 20, the cathode active material according to Experimental Example 5 was photographed by TEM (left photo), and the cathode active material according to Experimental Example 5 was analyzed by SAED in the [1, -1, 0] axis direction (right photo).

As shown in FIG. 20, it may be found that a streak-shaped electron diffraction patterns corresponding to a first partially regular mixed structure and a second partially regular mixed structure were observed in the cathode active material according to Experimental Example 5. In addition, it may be found that a spot-shaped electron diffraction pattern corresponding to a third partially regular mixed structure was observed in the cathode active material according to Experimental Example 5.

Table 16 is a table for describing characteristics for an initial capacity and charge/discharge cycles of a half-cell to which the cathode active material according to Experimental Example 5 of the present invention is applied.

Referring to Table 16, the initial capacity and a capacity retention rate for 100 charge/discharge cycles were measured for the half-cell to which the cathode active material according to Experimental Example 5 is applied under test conditions of Table 16.

As shown in Table 16, it may be found that under conditions of 3.0 V to 4.3 V and 30 °C, the half-cell to which the cathode active material according to Experimental Example 5 is applied exhibits an initial capacity of 171.9 mAh/g and a capacity retention rate of 95.9% based on 4.3 V (cut-off).

It may be found that under conditions of 3.0 V to 4.5 V and 30 °C, the half-cell to which the cathode active material according to Experimental Example 5 is applied exhibits an initial capacity of 200.3 mAh/g and a capacity retention rate of 93.1% based on 4.5 V (cut-off).

It may be found that under conditions of 3.0 V to 4.5 V and 45 °C, the half-cell to which the cathode active material according to Experimental Example 5 is applied exhibits an initial capacity of 209.1 mAh/g and a capacity retention rate of 90.2% based on 4.5 V (cut-off).

It may be found that under conditions of 3.0 V to 4.6 V and 45 °C, the half-cell to which the cathode active material according to Experimental Example 5 is applied exhibits an initial capacity of 223.7 mAh/g and a capacity retention rate of 88.9% based on 4.6 V (cut-off).

Therefore, it may be found that the half-cell to which the cathode active material according to Experimental Example 5 is applied has an excellent initial capacity and excellent stability for charge/discharge cycles under high-voltage and high-temperature charge/discharge conditions, since the first partially regular mixed structure, the second partially regular mixed structure, and the third partially regular mixed structure are provided in the lithium layer or the transition metal layer of the cathode active material according to Experimental Example 5.

**[Table 16]**

| Test condition | Cathod e | Uniqu e nanoc ompos ite struc ture | 0.1C charg e capad ity (mAh/ g) | 0.1C disch arge capac ity (mAh/ g) | 1st effic iency (%) | 0.5C disch arge capac ity (mAh/ g) | 0.5C/ 0.1C | No. of cyc les | Cycle reten tion |
|---|---|---|---|---|---|---|---|---|---|
| 3.0-4.3V, 30°C | NCM 500842 | O | 187.2 | 171.9 | 91.8% | 159.4 | 92.7% | 100 | 95.9% |
| 3.0-4.5V, 30°C | | | 209.9 | 200.3 | 95.4% | 184.8 | 92.3% | 100 | 93.1% |
| 3.0-4.5V, 45°C | | | 217.2 | 209.1 | 96.3% | 193.5 | 92.5% | 100 | 90.2% |
| 3.0-4.6V, 45 °C | | | 233.1 | 223.7 | 96.0% | 212.9 | 95.2% | 100 | 88.9% |

Table 17 is a table for analyzing a chemical composition of a cathode active material according to Experimental Example 6 of the present invention.

Referring to Table 17, a cathode to which the cathode active material according to Experimental Example 6 is applied was analyzed for Li, Ni, Co, and Mn elements by ICP-OES.

As shown in Table 17, it may be found that manufacture was performed such that a composition ratio of a transition metal in the cathode active material according to Experimental Example 6 is substantially identical to a target transition metal composition ratio. In addition, it may be found that a composition ratio of Li in the cathode active material according to Experimental Example 6 is 1.01, unlike the composition ratio of Li (1.15 to 1.20) of the general lithium-rich (Li-rich) cathode active material.

**[Table 17]**

| Cathode | Li (at%) | Ni (at%) | Co (at%) | Mn (at%) | Chemical composition |
|---|---|---|---|---|---|
| NCM501436 | 101% | 50.1% | 14.2% | 35.7% | Li_{1.01}[Ni_{0.501}Co_{0.142}Mn_{0,357}]O₂ |

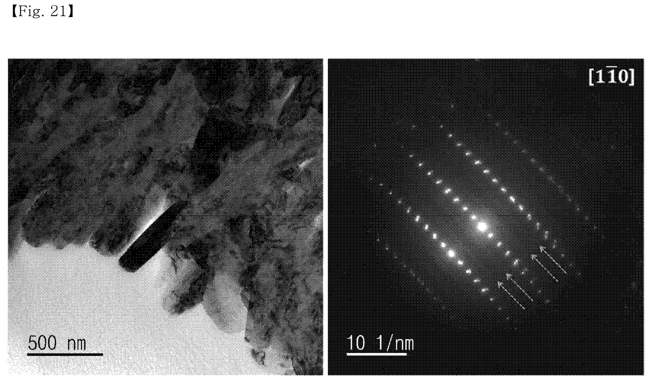

FIG. 21 is a photograph for describing a crystal structure of a cathode active material according to Experimental Example 6 of the present invention.

Referring to FIG. 21, the cathode active material according to Experimental Example 6 was photographed by TEM (left photo), and the cathode active material according to Experimental Example 6 was analyzed by SAED in the [1, -1, 0] axis direction (right photo).

As shown in FIG. 21, it may be found that streak-shaped electron diffraction patterns corresponding to a first partially regular mixed structure and a second partially regular mixed structure were observed in the cathode active material according to Experimental Example 6.

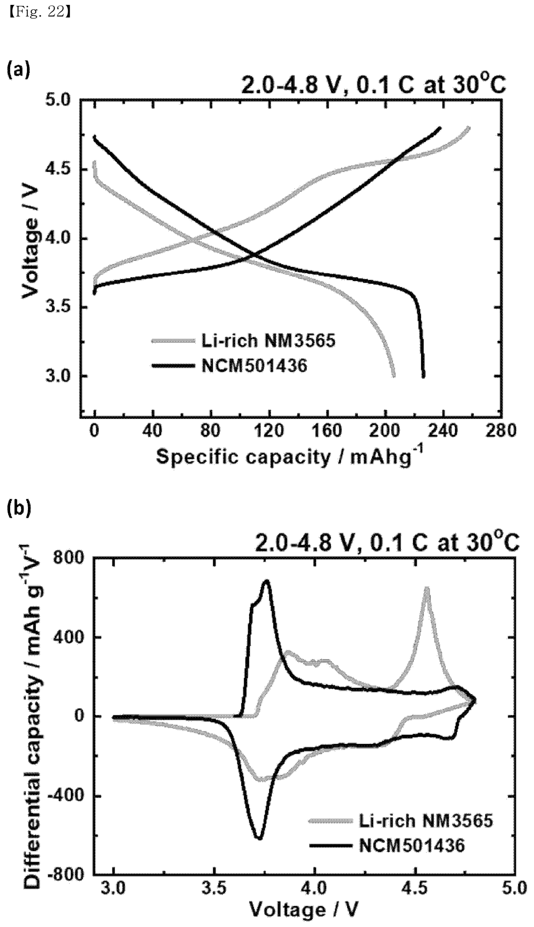

FIG. 22 is a graph for comparing charge/discharge curves of cathodes to which the cathode active materials according to Experimental Example 6 and Comparative Example 2-1 of the present invention are applied.

Referring to FIG. 22, a capacity according to an applied voltage was measured for the cathode to which the cathode active material according to Experimental Example 6 (NCM501436) is applied and a cathode to which the cathode active material according to Comparative Example 2-1 (Li-rich NM3565) is applied.

As shown in FIG. 22, it may be found that upon charging at 4.8 V, a plateau phenomenon did not occur around 4.5 V in the cathode to which the cathode active material according to Experimental Example 6 is applied, and a plateau phenomenon occurred around 4.5 V in the cathode to which the cathode active material according to Comparative Example 2-1 is applied.

In addition, it may be found that oxidation/reduction mechanisms of the cathode to which the cathode active material according to Experimental Example 6 is applied and the cathode to which the cathode active material according to Comparative Example 2-1 is applied are is different from each other.

Therefore, it may be found that crystal structures of the cathode active material according to Experimental Example 6 and the cathode active material according to Comparative Example 2-1 are different from each other.

Table 18 is a table for comparing a volume variation of a unit cell according to a charging voltage for the cathode active material according to Experimental Example 6 of the present invention.

Referring to Table 18, when the cathode to which the cathode active material according to Experimental Example 6 is applied is charged according to the charging voltages of Table 18, the volume variation of the unit cell in the cathode active material according to Experimental Example 6 was analyzed by in-situ XRD.

As shown in Table 18, it may be found that when the cathode to which the cathode active material according to Experimental Example 6 is applied is charged at 4.3 V, the volume variation of the unit cell of the cathode active material according to Experimental Example 6 is 2.18%.

It may be found that when the cathode to which the cathode active material according to Experimental Example 6 is applied is charged at 4.5 V, the volume variation of the unit cell of the cathode active material according to Experimental Example 6 is 2.96%.

It may be found that when the cathode to which the cathode active material according to Experimental Example 6 is applied is charged at 4.7 V, the volume variation of the unit cell of the cathode active material according to Experimental Example 6 is 3.98%.

Therefore, it may be found that since the first partially regular mixed structure and the second partially regular mixed structure are provided in the lithium layer or the transition metal layer of the cathode active material according to Experimental Example 6, the volume variation of the unit cell of the cathode active material according to Experimental Example 6 is minimized even upon charging at high voltages.

**[Table 18]**

| Cathode | Unique nanocomposite structure | Unit cell volume variation (%) | | | | | | |
|---|---|---|---|---|---|---|---|---|
| | | 3.5 V | 3.7 V | 3.9 V | 4.1 V | 4.3 V | 4.5 V | 4.7 V |
| NCM501436 | O | 0% | 0.14% | 1.31% | 1.61% | 2.18% | 2.96% | 3.98% |

Table 19 is a table for describing characteristics for an initial capacity and charge/discharge cycles of a half-cell to which the cathode active material according to Experimental Example 6 of the present invention is applied.

Referring to Table 19, the initial capacity and a capacity retention rate for 100 charge/discharge cycles were measured for the half-cell to which the cathode active material according to Experimental Example 6 is applied under test conditions of Table 19.

As shown in Table 19, it may be found that under conditions of 3.0 V to 4.3 V and 30 °C, the half-cell to which the cathode active material according to Experimental Example 6 is applied exhibits an initial capacity of 173.4 mAh/g and a capacity retention rate of 95.1% based on 4.3 V (cut-off).

It may be found that under conditions of 3.0 V to 4.5 V and 30 °C, the half-cell to which the cathode active material according to Experimental Example 6 is applied exhibits an initial capacity of 200.7 mAh/g and a capacity retention rate of 91.4% based on 4.5 V (cut-off).

It may be found that under conditions of 3.0 V to 4.5 V and 45 °C, the Half-Cell to which the cathode active material according to Experimental Example 6 is applied exhibits an initial capacity of 209.2 mAh/g and a capacity retention rate of 88.9% based on 4.5 V (cut-off).

It may be found that under conditions of 3.0 V to 4.6 V and 45 °C, the Half-Cell to which the cathode active material according to Experimental Example 6 is applied exhibits an initial capacity of 224.1 mAh/g and a capacity retention rate of 85.4% based on 4.6 V (cut-off).

Therefore, it may be found that the half-cell to which the cathode active material according to Experimental Example 6 is applied has an excellent initial capacity and excellent stability for charge/discharge cycles under high-voltage and high-temperature charge/discharge conditions, since the first partially regular mixed structure and the second partially regular mixed structure are provided in the lithium layer or the transition metal layer of the cathode active material according to Experimental Example 6.

**[Table 19]**

| Test condition | Cathode | Unique nanocom posite structu re | 0.1C charge capad ity (mAh/ g) | 0.1C disch arge capac ity (mAh/ g) | 1st effic iency (%) | 0.5C disch arge capac ity (mAh/ g) | 0.5C/ 0.1C | No. of cyc les | Cycle reten tion |
|---|---|---|---|---|---|---|---|---|---|
| 3.0-4.3V, 30°C | NCM 501436 | O | 187.9 | 173.4 | 92.3% | 160.9 | 92.8% | 100 | 95.1% |
| 3.0-4.5V, 30°C | | | 210.4 | 200.7 | 95.4% | 184.9 | 92.1% | 100 | 91.4% |
| 3.0-4.5V, 45°C | | | 217.0 | 209.2 | 96.4% | 193.7 | 92.6 | 100 | 88.9% |
| 3.0-4.6V, 45°C | | | 232.2 | 224.1 | 96.5% | 213.7 | 95.4% | 100 | 85.4% |

Table 20 is a table for analyzing a chemical composition of a cathode active material according to Experimental Example 7 of the present invention.

Referring to Table 20, a cathode to which the cathode active material according to Experimental Example 7 is applied was analyzed for Li, Ni, Co, and Mn elements by ICP-OES.

As shown in Table 20, it may be found that manufacture was performed such that a composition ratio of a transition metal in the cathode active material according to Experimental Example 7 is substantially identical to a target transition metal composition ratio. In addition, it may be found that a composition ratio of Li in the cathode active material according to Experimental Example 7 is 1.01, unlike the composition ratio of Li (1.15 to 1.20) of the general lithium-rich (Li-rich) cathode active material.

**[Table 20]**

| Cathode | Li (at%) | Ni (at%) | Co (at%) | Mn (at%) | Chemical composition |
|---|---|---|---|---|---|
| NCM502030 | 101% | 50.3% | 20.1% | 29.6% | Li_{1.01}[Ni_{0.503}CO_{0.201}Mn_{0.2961}]O₂ |

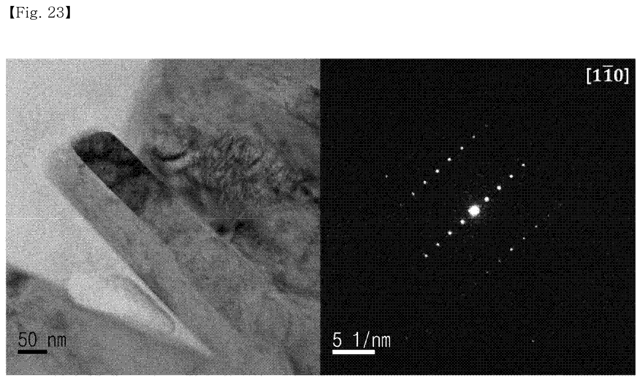

FIG. 23 is a photograph for describing a crystal structure of a cathode active material according to Experimental Example 7 of the present invention.

Referring to FIG. 23, the cathode active material according to Experimental Example 7 was photographed by TEM (left photo), and the cathode active material according to Experimental Example 7 was analyzed by SAED in the [1, -1, 0] axis direction (right photo).

As shown in FIG. 23, it may be found that an electron diffraction pattern corresponding to a partially regular mixed structure was not observed in the cathode active material according to Experimental Example 7, and only an electron diffraction pattern corresponding to an R-3m layered crystal structure was observed.

Table 21 is a table for comparing a volume variation of a unit cell according to a charging voltage for the cathode active material according to Experimental Example 7 of the present invention.

Referring to Table 21, when the cathode to which the cathode active material according to Experimental Example 7 is applied is charged according to the charging voltages of Table 21, the volume variation of the unit cell in the cathode active material according to Experimental Example 7 was analyzed by in-situ XRD.

As shown in Table 21, it may be found that when the cathode to which the cathode active material according to Experimental Example 7 is applied is charged at 4.3 V, the volume variation of the unit cell of the cathode active material according to Experimental Example 7 is 2.82%.

It may be found that when the cathode to which the cathode active material according to Experimental Example 7 is applied is charged at 4.5 V, the volume variation of the unit cell of the cathode active material according to Experimental Example 7 is 4.72%.

It may be found that when the cathode to which the cathode active material according to Experimental Example 7 is applied is charged at 4.7 V, the volume variation of the unit cell of the cathode active material according to Experimental Example 7 is 6.24%.

**[Table 21]**

| Cathode | Unique canocomposite structure | Unit cell volume variation (%) | | | | | | |
|---|---|---|---|---|---|---|---|---|
| | | 3.5 V | 3.7 V | 3.9 V | 4.1 V | 4.3 V | 4.5 V | 4.7 V |
| NCM502030 | X | 0% | 0.25% | 1.41 | 1.94% | 2.82% | 4.72% | 6.24% |

Table 22 is a table for describing characteristics for an initial capacity and charge/discharge cycles of a half-cell to which the cathode active material according to Experimental Example 7 of the present invention is applied.

Referring to Table 22, the initial capacity and a capacity retention rate for 100 charge/discharge cycles were measured for the half-cell to which the cathode active material according to Experimental Example 7 is applied under test conditions of Table 22.

As shown in Table 22, it may be found that under conditions of 3.0 V to 4.3 V and 30 °C, the half-cell to which the cathode active material according to Experimental Example 7 is applied exhibits an initial capacity of 174.2 mAh/g and a capacity retention rate of 93.4% based on 4.3 V (cut-off).

It may be found that under conditions of 3.0 V to 4.5 V and 30 °C, the half-cell to which the cathode active material according to Experimental Example 7 is applied exhibits an initial capacity of 201.9 mAh/g and a capacity retention rate of 84.9% based on 4.5 V (cut-off).

It may be found that under conditions of 3.0 V to 4.5 V and 45 °C, the half-cell to which the cathode active material according to Experimental Example 7 is applied exhibits an initial capacity of 207.7 mAh/g and a capacity retention rate of 77.4% based on 4.5 V (cut-off).

It may be found that under conditions of 3.0 V to 4.6 V and 45 °C, the half-cell to which the cathode active material according to Experimental Example 7 is applied exhibits an initial capacity of 219.2 mAh/g and a capacity retention rate of 71.2% based on 4.6 V (cut-off).

**[Table 22]**

| Test condition | Cathode | Unique nanoco mposit e struct ure | 0.1C charge capad ity (mAh/ g) | 0.1C disch arge capac ity (mAh/ g) | 1st effic iency (%) | 0.5C disch arge capac ity (mAh/ g) | 0.5C/ 0.1C | No. of cyc les | Cycle reten tion |
|---|---|---|---|---|---|---|---|---|---|
| 3.0-4.3V, 30°C | NCM 502030 | X | 191.5 | 174.2 | 91.0% | 161.4 | 92.7% | 100 | 93.4% |
| 3.0-4.5V, 30°C | | | 212.1 | 201.9 | 95.2% | 186.7 | 92.5% | 100 | 84.9% |
| 3.0-4.5V, 45°C | | | 213.9 | 207.7 | 97.1% | 195.4 | 94.1% | 100 | 77.4% |
| 3.0-4.6V, 45°C | | | 228.1 | 219.2 | 96.1% | 212.8 | 97.1% | 100 | 71.2% |

Table 23 is a table for comparing characteristics for an initial capacity and charge/discharge cycles of half-cells to which the cathode active materials according to Experimental Examples 5 to 7 of the present invention are applied.

Referring to Table 23, characteristic results of the initial capacity and the charge/discharge cycles of the half-cell to which the cathode active material according to Experimental Example 5 (NCM500842) described above is applied, characteristic results of the initial capacity and the charge/discharge cycles of the half-cell to which the cathode active material according to Experimental Example 6 (NCM501436) described above is applied, and characteristic results of the initial capacity and the charge/discharge cycles of the half-cell to which the cathode active material according to Experimental Example 7 (NCM502030) described above is applied were integrated and organized into a table.

As shown in Table 23, it may be found that the half-cell to which the cathode active material according to Experimental Example 7 is applied has a lower initial capacity and a significantly lower capacity retention rate for charge/discharge cycles than the half-cells to which the cathode active materials according to Experimental Examples 5 and 6 are applied under high-voltage (4.5 V, 4.6 V) and high-temperature (45 °C) conditions. The factor of the above configuration may be interpreted to be due to the fact that a partially regular mixed structure is not provided in the transition metal layer or the lithium layer of the cathode active material according to Experimental Example 7.

In addition, the factor of absence of the partially regular mixed structure in the cathode active material according to Experimental Example 7 may be interpreted to be due to the fact that in a process of preparing the cathode active material according to Experimental Example 7, a content of Mn in a transition metal source according to Experimental Example 7 is lower than a content of Mn in each of transition metal sources according to Experimental Examples 5 and 6. Accordingly, it may be found that in a process of preparing the cathode active material according to the embodiment of the present invention, when at% of Ni in the transition metal source is controlled to 50%, at% of Mn has to be controlled to be greater than or equal to 32%.

**[Table 23]**

| Test condition | Cathode | Uniqu e nanoc ompos ite struc ture | 0.1C charg e capad ity (mAh/ g) | 0.1C disch arge capac ity (mAh/ g) | 1st effic iency (%) | 0.5C disch arge capac ity (mAh/ g) | 0.5C/ 0.1C | No. of cyc les | Cycle reten tion |
|---|---|---|---|---|---|---|---|---|---|
| 3.0-4.3V, 30°C | NCM500842 | O | 187.2 | 171.9 | 91.8% | 159.4 | 92.7% | 100 | 95.9% |
| | NCM501436 | O | 187.9 | 173.4 | 92.3% | 160.9 | 92.8% | 100 | 95.1% |
| | NCM502030 | X | 191.5 | 174.2 | 91.0% | 161.4 | 92.7% | 100 | 93.4% |
| 3.0-4.5V, 30°C | NCM500842 | O | 209.9 | 200.3 | 95.4% | 184.8 | 92.3% | 100 | 93.1% |
| | NCM501436 | O | 210.4 | 200.7 | 95.4% | 184.9 | 92.1% | 100 | 91.4% |
| | NCM502030 | X | 212.1 | 201.9 | 95.2% | 186.7 | 92.5% | 100 | 84.9% |
| 3.0-4.5V, 45°C | NCM500842 | O | 217.2 | 209.1 | 96.3% | 193.5 | 92.5% | 100 | 90.2% |
| | NCM501436 | O | 217.0 | 209.2 | 96.4% | 193.7 | 92.6% | 100 | 88.9% |
| | NCM502030 | X | 213.9 | 207.7 | 97.1% | 195.4 | 94.1% | 100 | 77.4% |
| 3.0-4.6V, 45°C | NCM500842 | O | 233.1 | 223.7 | 96.0% | 212.9 | 95.2% | 100 | 88.9% |
| | NCM501436 | O | 232.2 | 224.1 | 96.5% | 213.7 | 95.4% | 100 | 85.4% |
| | NCM502030 | X | 228.1 | 219.2 | 96.1% | 212.8 | 97.1% | 100 | 71.2% |

Table 24 is a table for analyzing a chemical composition of a cathode active material according to Experimental Example 8 of the present invention.

Referring to Table 24, a cathode to which the cathode active material according to Experimental Example 8 is applied was analyzed for Li, Ni, Co, and Mn elements by ICP-OES.

As shown in Table 24, it may be found that manufacture was performed such that a composition ratio of a transition metal in the cathode active material according to Experimental Example 8 is substantially identical to a target transition metal composition ratio. In addition, it may be found that a composition ratio of Li in the cathode active material according to Experimental Example 8 is 1.09.

**[Table 24]**

| Cathode | Li (at%) | Ni (at%) | Mn (at%) | Chemical composition |
|---|---|---|---|---|
| NM3466 | 109% | 34.2% | 65.8% | Li_{0.09}[Ni_{0.342}Mn_{0.658}]O₂ |

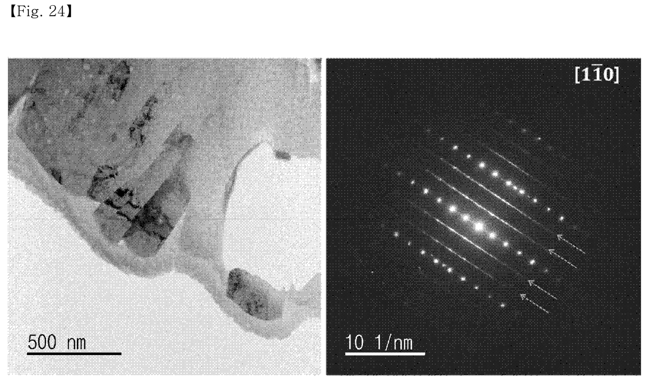

FIG. 24 is a photograph for describing a crystal structure of a cathode active material according to Experimental Example 8 of the present invention.

Referring to FIG. 24, the cathode active material according to Experimental Example 8 was photographed by TEM (left photo), and the cathode active material according to Experimental Example 8 was analyzed by SAED in the [1, -1, 0] axis direction (right photo).

As shown in FIG. 24, it may be found that streak-shaped electron diffraction patterns corresponding to a first partially regular mixed structure and a second partially regular mixed structure were observed in the cathode active material according to Experimental Example 8.

Table 25 is a table for analyzing chemical compositions of cathode active materials according to Experimental Examples 9 and 10 of the present invention.

Referring to Table 25, a cathode to which the cathode active material according to Experimental Example 9 (NM9010) is applied was analyzed for Li, Ni, Co, and Mn elements by ICP-OES. In addition, a cathode to which the cathode active material according to Experimental Example 10 (NCM900505) is applied was analyzed for Li, Ni, Co, and Mn elements by ICP-OES.

As shown in Table 25, it may be found that manufacture was performed such that a composition ratio of a transition metal in the cathode active material according to Experimental Example 9 is substantially identical to a target transition metal composition ratio. In addition, it may be found that a composition ratio of Li in the cathode active material according to Experimental Example 9 is 1.01, unlike the composition ratio of Li (1.15 to 1.20) of the general lithium-rich (Li-rich) cathode active material.

In addition, it may be found that manufacture was performed such that a composition ratio of a transition metal in the cathode active material according to Experimental Example 10 is substantially identical to a target transition metal composition ratio. In addition, it may be found that a composition ratio of Li in the cathode active material according to Experimental Example 10 is 1.01, unlike the composition ratio of Li (1.15 to 1.20) of the general lithium-rich (Li-rich) cathode active material.

**[Table 25]**

| Cathode | Li (at%) | Ni (at%) | Co (at%) | Mn (at%) | Chemical composition |
|---|---|---|---|---|---|
| NM9010 | 101% | 90.2% | - | 9.8% | Li_{1.01}[Ni_{0.902}Mn_{0.098}]O₂ |
| NCM900505 | 101% | 90.1% | 4.9% | 5.0% | Li_{1.01}[Ni_{0.991}C0_{0.049}Mn_{0.050}]O₂ |

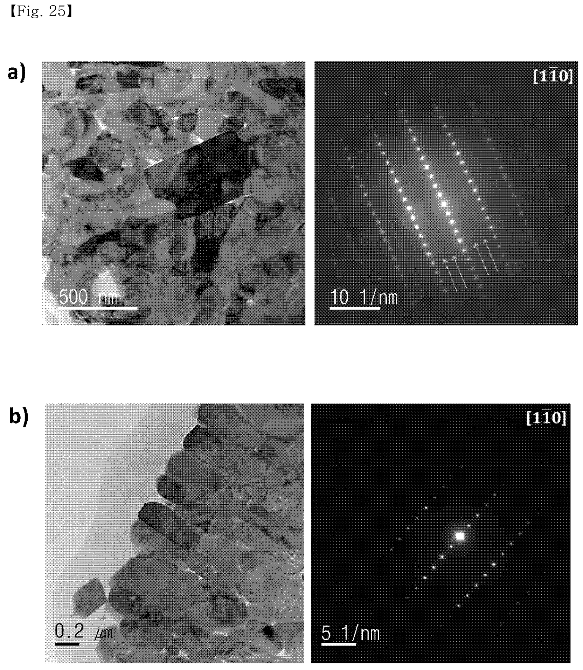

FIG. 25 is a photograph for comparing crystal structures of cathode active materials according to Experimental Example 9 and Experimental Example 10 of the present invention.

Referring to (a) of FIG. 25, the cathode active material according to Experimental Example 9 (NM9010) was photographed by TEM (left photo), and the cathode active material according to Experimental Example 9 (NM9010) was analyzed by SAED in the [1, -1, 0] axis direction (right photo). Referring to (b) of FIG. 49, the cathode active material according to Experimental Example 10 (NCM900505) was photographed by TEM (left photo), and the cathode active material according to Experimental Example 10 (NCM900505) was analyzed by SAED in the [1, -1, 0] axis direction (right photo).

As shown in (a) and (b) of FIG. 25, it may be found that streak-shaped electron diffraction patterns corresponding to a first partially regular mixed structure and a second partially regular mixed structure were observed in the cathode active material according to Experimental Example 9, whereas an electron diffraction pattern corresponding to a partially regular mixed structure was not observed in the cathode active material according to Experimental Example 10.

Table 26 is a table for comparing a volume variation of a unit cell according to a charging voltage for the cathode active materials according to Experimental Examples 9 and 10 of the present invention.

Referring to Table 26, when the cathode to which the cathode active material according to Experimental Example 9 (NM9010) is applied is charged according to the charging voltages of Table 26, the volume variation of the unit cell in the cathode active material according to Experimental Example 9 (NM9010) was analyzed by in-situ XRD. In addition, when the cathode to which the cathode active material according to Experimental Example 10 (NCM900505) is applied is charged according to the charging voltages of Table 26, the volume variation of the unit cell in the cathode active material according to Experimental Example 10 (NCM900505) was analyzed by in-situ XRD.

As shown in Table 26, it may be found that when the cathode to which the cathode active material according to Experimental Example 9 is applied is charged at 4.3 V, the volume variation of the unit cell of the cathode active material according to Experimental Example 9 is 6.92%. In addition, it may be found that when the cathode to which the cathode active material according to Experimental Example 10 is applied is charged at 4.3 V, the volume variation of the unit cell of the cathode active material according to Experimental Example 10 is 7.68%.

It may be found that when the cathode to which the cathode active material according to Experimental Example 9 is applied is charged at 4.5 V, the volume variation of the unit cell of the cathode active material according to Experimental Example 9 is 8.24%. In addition, it may be found that when the cathode to which the cathode active material according to Experimental Example 10 is applied is charged at 4.5 V, the volume variation of the unit cell of the cathode active material according to Experimental Example 10 is 9.47%.

Therefore, it may be found that the cathode active material according to Experimental Example 9 has a smaller volume variation of a unit cell than the cathode active material according to Experimental Example 10 upon charging at high voltages. In other words, it may be found that the cathode active material according to Experimental Example 9 has a more stable crystal structure than the cathode active material according to Experimental Example 10. The factor of the above configuration may be interpreted to be due to the fact that the first partially regular mixed structure and the second partially regular mixed structure are provided in the transition metal layer or the lithium metal layer of the cathode active material according to Experimental Example 9.

**[Table 26]**

| Cathode | Unique nanocomposite structure | Unit cell volume variation (%) | | | | | |
|---|---|---|---|---|---|---|---|
| | | 3.5 V | 3.7 V | 3.9 V | 4.1 V | 4.3 V | 4.5 V |
| NM9010 | O | 0% | 0.58% | 1.63% | 2.18% | 6.92% | 8.24% |
| NCM900505 | X | | 0.72% | 1.81% | 2.45% | 7.68% | 9.47% |

Table 27 is a table for describing characteristics for an initial capacity and charge/discharge cycles of half-cells to which the cathode active materials according to Experimental Example 9 and 10 of the present invention are applied.

Referring to Table 27, the initial capacity and a capacity retention rate for 100 charge/discharge cycles were measured for the half-cell to which the cathode active material according to Experimental Example 9 is applied under test conditions of Table 27. In addition, the initial capacity and a capacity retention rate for 100 charge/discharge cycles were measured for the half-cell to which the cathode active material according to Experimental Example 10 is applied under the test conditions of Table 27.

As shown in Table 27, it may be found that under conditions of 3.0 V to 4.3 V and 30 °C, the half-cell to which the cathode active material according to Experimental Example 9 is applied exhibits an initial capacity of 228.9 mAh/g and a capacity retention rate of 91.8% based on 4.3 V (cut-off), and the half-cell to which the cathode active material according to Experimental Example 10 is applied exhibits an initial capacity of 231.2 mAh/g and a capacity retention rate of 84.2% based on 4.3 V (cut-off).

It may be found that under conditions of 3.0 V to 4.4 V and 30 °C, the half-cell to which the cathode active material according to Experimental Example 9 is applied exhibits an initial capacity of 234.1 mAh/g and a capacity retention rate of 88.2% based on 4.4 V (cut-off), and the half-cell to which the cathode active material according to Experimental Example 10 is applied exhibits an initial capacity of 235.9 mAh/g and a capacity retention rate of 80.1% based on 4.4 V (cut-off).

Therefore, it may be found that the half-cell to which the cathode active material according to Experimental Example 9 is applied has better stability for charging/discharging than the half-cell to which the cathode active material according to Experimental Example 10 is applied at high voltages. The factor of the above configuration may be interpreted to be due to the fact that the first partially regular mixed structure and the second partially regular mixed structure are provided in the transition metal layer or the lithium metal layer of the cathode active material according to Experimental Example 9.

**[Table 27]**

| Test condition | Cathode | Uniqu e nanoc ompos ite struc ture | 0.1C charg e capad ity (mAh/ g) | 0.1C disch arge capac ity (mAh/ g) | 1st effic iency (%) | 0.5C disch arge capac ity (mAh/ g) | 0.5C/ 0.1C | No. of cyc les | Cycle reten tion |
|---|---|---|---|---|---|---|---|---|---|
| 3.0-4.3V, 30°C | NM9010 | O | 237.1 | 228.9 | 96.5% | 208.4 | 91.0% | 100 | 91.8% |
| | NCM900505 | X | 238.2 | 231.2 | 97.1% | 212.5 | 91.9% | 100 | 84.2% |
| 3.0-4.4V, 30°C | NM9010 | O | 242.7 | 234.1 | 96.5% | 218.9 | 93.5% | 100 | 88.2% |
| | NCM900505 | X | 243.4 | 235.9 | 96.9% | 219.2 | 92.9% | 100 | 80.1% |

Table 28 is a table for analyzing chemical compositions of cathode active materials according to Experimental Examples 11 and 12 of the present invention.

Referring to Table 28, a cathode to which the cathode active material according to Experimental Example 11 (NM8020) is applied was analyzed for Li, Ni, Co, and Mn elements by ICP-OES. In addition, a cathode to which the cathode active material according to Experimental Example 12 (NCM801010) is applied was analyzed for Li, Ni, Co, and Mn elements by ICP-OES.

As shown in Table 28, it may be found that manufacture was performed such that a composition ratio of a transition metal in the cathode active material according to Experimental Example 11 is substantially identical to a target transition metal composition ratio. In addition, it may be found that a composition ratio of Li in the cathode active material according to Experimental Example 11 is 1.01, unlike the composition ratio of Li (1.15 to 1.20) of the general lithium-rich (Li-rich) cathode active material.

In addition, it may be found that manufacture was performed such that a composition ratio of a transition metal in the cathode active material according to Experimental Example 12 is substantially identical to a target composition ratio of the transition metal. In addition, it may be found that a composition ratio of Li in the cathode active material according to Experimental Example 12 is 1.01, unlike the composition ratio of Li (1.15 to 1.20) of the general lithium-rich (Li-rich) cathode active material.

**[Table 28]**

| Cathode | Li (at%) | Ni (at%) | Co (at%) | Mn (at%) | Chemical composition |
|---|---|---|---|---|---|
| NM8020 | 101% | 80.4% | - | 19.6% | Li_{1.01}[Ni_{0.804}Mn_{0.196}]O₂ |
| NCM801010 | 101% | 80.2% | 10.1% | 9.7% | Li_{1.01}[Ni_{0.802}CO_{0.101}Mn_{0.097}]O₂ |

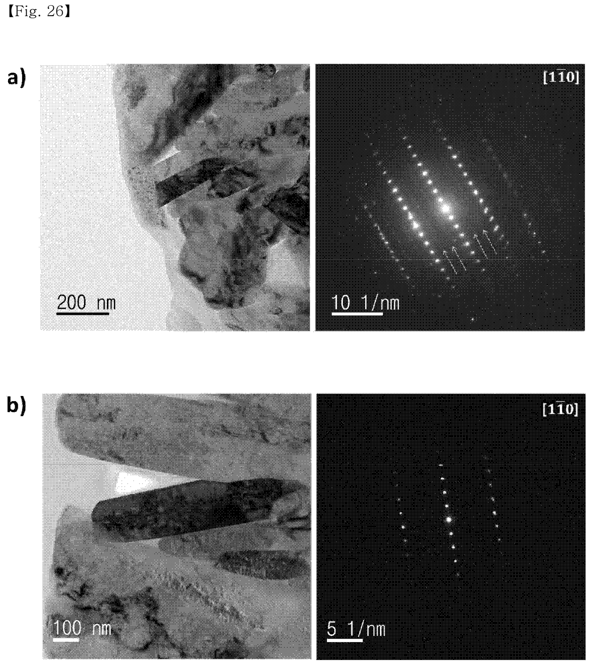

FIG. 26 is a photograph for comparing crystal structures of cathode active materials according to Experimental Example 11 and Experimental Example 12 of the present invention.

Referring to (a) of FIG. 26, the cathode active material according to Experimental Example 11 (NM8020) was photographed by TEM (left photo), and the cathode active material according to Experimental Example 11 (NM8020) was analyzed by SAED in the [1, -1, 0] axis direction (right photo). Referring to (b) of FIG. 53, the cathode active material according to Experimental Example 12 (NCM801010) was photographed by TEM (left photo), and the cathode active material according to Experimental Example 12 (NCM801010) was analyzed by SAED in the [1, -1, 0] axis direction (right photo).

As shown in (a) and (b) of FIG. 26, it may be found that streak-shaped electron diffraction patterns corresponding to a first partially regular mixed structure and a second partially regular mixed structure were observed in the cathode active material according to Experimental Example 11, whereas an electron diffraction pattern corresponding to a partially regular mixed structure was not observed in the cathode active material according to Experimental Example 12.

Table 29 is a table for comparing a volume variation of a unit cell according to a charging voltage for the cathode active materials according to Experimental Examples 11 and 12 of the present invention.

Referring to Table 29, when the cathode to which the cathode active material according to Experimental Example 11 (NM8020) is applied is charged according to the charging voltages of Table 29, the volume variation of the unit cell in the cathode active material according to Experimental Example 11 (NM8020) was analyzed by in-situ XRD. In addition, when the cathode to which the cathode active material according to Experimental Example 12 (NCM801010) is applied is charged according to the charging voltages of Table 29, the volume variation of the unit cell in the cathode active material according to Experimental Example 12 (NCM801010) was analyzed by in-situ XRD.

As shown in Table 29, it may be found that when the cathode to which the cathode active material according to Experimental Example 11 is applied is charged at 4.3 V, the volume variation of the unit cell of the cathode active material according to Experimental Example 11 is 4.24%. In addition, it may be found that when the cathode to which the cathode active material according to Experimental Example 12 is applied is charged at 4.3 V, the volume variation of the unit cell of the cathode active material according to Experimental Example 12 is 5.11%.

In may be found that when the cathode to which the cathode active material according to Experimental Example 11 is applied is charged at 4.5 V, the volume variation of the unit cell of the cathode active material according to Experimental Example 11 is 6.93%. In addition, it may be found that when the cathode to which the cathode active material according to Experimental Example 12 is applied is charged at 4.5 V, the volume variation of the unit cell of the cathode active material according to Experimental Example 12 is 8.01%.

Therefore, it may be found that the cathode active material according to Experimental Example 11 has a smaller volume variation of a unit cell than the cathode active material according to Experimental Example 12. In other words, it may be found that the cathode active material according to Experimental Example 11 has a more stable crystal structure than the cathode active material according to Experimental Example 12. The factor of the above configuration may be interpreted to be due to the fact that the first partially regular mixed structure and the second partially regular mixed structure are provided in the transition metal layer or the lithium metal layer of the cathode active material according to Experimental Example 11.

**[Table 29]**

| Cathode | Unique nanocomposite structure | Unit cell volume variation (%) | | | | | |
|---|---|---|---|---|---|---|---|
| | | 3.5 V | 3.7 V | 3.9 V | 4.1 V | 4.3 V | 4.5 V |
| NM8020 | O | 0% | 0.45% | 1.77% | 2.12% | 4.24% | 6.93% |
| NCM801010 | X | | 0.52% | 1.94% | 2.31% | 5.11% | 8.01% |

Table 30 is a table for describing characteristics for an initial capacity and charge/discharge cycles of half-cells to which the cathode active materials according to Experimental Example 11 and 12 of the present invention are applied.

Referring to Table 30, the initial capacity and a capacity retention rate for 100 charge/discharge cycles were measured for the half-cell to which the cathode active material according to Experimental Example 11 (NM8020) is applied under test conditions of Table 30. In addition, the initial capacity and a capacity retention rate for 100 charge/discharge cycles were measured for the half-cell to which the cathode active material according to Experimental Example 12 (NM801010) is applied under the test conditions of Table 30.

As shown in Table 30, it may be found that under conditions of 3.0 V to 4.3 V and 30 °C, the half-cell to which the cathode active material according to Experimental Example 11 is applied exhibits an initial capacity of 210.1 mAh/g and a capacity retention rate of 92.7% based on 4.3 V (cut-off), and the half-cell to which the cathode active material according to Experimental Example 12 is applied exhibits an initial capacity of 212.9 mAh/g and a capacity retention rate of 87.1% based on 4.3 V (cut-off).

It may be found that under conditions of 3.0 V to 4.4 V and 30 °C, the half-cell to which the cathode active material according to Experimental Example 11 is applied exhibits an initial capacity of 220.9 mAh/g and a capacity retention rate of 90.4% based on 4.4 V (cut-off), and the half-cell to which the cathode active material according to Experimental Example 12 is applied exhibits an initial capacity of 223.1 mAh/g and a capacity retention rate of 82.9% based on 4.4 V (cut-off).

Therefore, it may be found that the half-cell to which the cathode active material according to Experimental Example 11 is applied has better stability for charging/discharging than the half-cell to which the cathode active material according to Experimental Example 12 is applied at high voltages. The factor of the above configuration may be interpreted to be due to the fact that the first partially regular mixed structure and the second partially regular mixed structure are provided in the transition metal layer or the lithium metal layer of the cathode active material according to Experimental Example 11.

**[Table 30]**

| Test condition | Cathode | Uniqu e nanoc ompos ite struc ture | 0.1C charg e capad ity (mAh/ g) | 0.1C disch arge capac ity (mAh/ g) | 1st effic iency (%) | 0.5C Disch arge capac ity (mAh/ g) | 0.5C/ 0.1C | No. of cyc les | Cycle reten tion |
|---|---|---|---|---|---|---|---|---|---|
| 3.0-4.3V, 30°C | NM8020 | O | 218.6 | 210.1 | 96.1% | 192.1 | 91.4% | 100 | 92.7% |
| | NCM801010 | X | 220.4 | 212.9 | 96.6% | 195.4 | 91.8% | 100 | 87.1% |
| 3.0-4.4V, 30°C | NM8020 | O | 229.7 | 220.9 | 96.2% | 202.7 | 91.8% | 100 | 90.4% |
| | NCM801010 | X | 231.8 | 223.1 | 96.2% | 204.2 | 91.5% | 100 | 82.9% |

Table 31 is a table for analyzing a chemical composition of a cathode active material according to Experimental Example 13 of the present invention.

Referring to Table 31, a cathode to which the cathode active material according to Experimental Example 13 is applied was analyzed for Li, Ni, Co, and Mn elements by ICP-OES.

As shown in Table 31, it may be found that manufacture was performed such that a composition ratio of a transition metal in the cathode active material according to Experimental Example 13 is substantially identical to a target transition metal composition ratio. In addition, it may be found that a composition ratio of Li in the cathode active material according to Experimental Example 13 is 1.01, unlike the composition ratio of Li (1.15 to 1.20) of the general lithium-rich (Li-rich) cathode active material.

**[Table 31]**

| Cathode | Li (at%) | Ni (at%) | Co (at%) | Mn (at%) | Chemical composition |
|---|---|---|---|---|---|
| NM7030 | 101% | 70.2% | - | 29.8% | Li_{1. 01}[Ni_{0.702}Mn_{0.208}]O₂ |

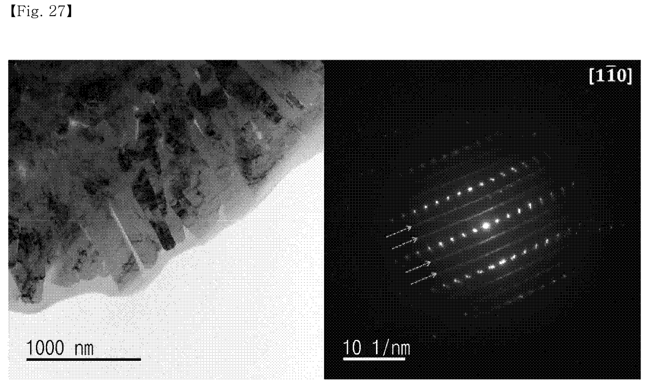

FIG. 27 is a photograph for describing a crystal structure of a cathode active material according to Experimental Example 13 of the present invention.

Referring to FIG. 27, the cathode active material according to Experimental Example 13 was photographed by TEM (left photo), and the cathode active material according to Experimental Example 13 was analyzed by SAED in the [1, -1, 0] axis direction (right photo).

As shown in FIG. 27, it may be found that streak-shaped electron diffraction patterns corresponding to a first partially regular mixed structure and a second partially regular mixed structure were observed in the cathode active material according to Experimental Example 13.

Table 32 is a table for comparing a volume variation of a unit cell according to a charging voltage for the cathode active material according to Experimental Example 13 of the present invention.

Referring to Table 32, when the cathode to which the cathode active material according to Experimental Example 13 is applied is charged according to the charging voltages of Table 32, the volume variation of the unit cell in the cathode active material according to Experimental Example 13 was analyzed by in-situ XRD.

As shown in Table 32, it may be found that when the cathode to which the cathode active material according to Experimental Example 13 is applied is charged at 4.3 V, the volume variation of the unit cell of the cathode active material according to Experimental Example 13 is 2.98%.

It may be found that when the cathode to which the cathode active material according to Experimental Example 13 is applied is charged at 4.5 V, the volume variation of the unit cell of the cathode active material according to Experimental Example 13 is 4.82%.

**[Table 32]**

| Cathode | Unique nanocomposite structure | Unit cell volume variation (%) | | | | | |
|---|---|---|---|---|---|---|---|
| | | 3.5 V | 3.7 V | 3.9 V | 4.1 V | 4.3 V | 4.5 V |
| NM7030 | O | 0% | 0.22% | 1.34% | 2.08% | 2.98% | 4.82% |

Table 33 is a table for describing characteristics for an initial capacity and charge/discharge cycles of a half-cell to which the cathode active material according to Experimental Example 13 of the present invention is applied.

Referring to Table 33, the initial capacity and a capacity retention rate for 100 charge/discharge cycles were measured for the half-cell to which the cathode active material according to Experimental Example 13 is applied under test conditions of Table 33.

As shown in Table 33, it may be found that under conditions of 3.0 V to 4.3 V and 30 °C, the half-cell to which the cathode active material according to Experimental Example 13 is applied exhibits an initial capacity of 190.5 mAh/g and a capacity retention rate of 95.8% based on 4.3 V (cut-off).

It may be found that under conditions of 3.0 V to 4.4 V and 30 °C, the half-cell to which the cathode active material according to Experimental Example 13 is applied exhibits an initial capacity of 211.4 mAh/g and a capacity retention rate of 93.1% based on 4.4 V (cut-off).

Therefore, it may be found that the half-cell to which the cathode active material according to Experimental Example 13 is applied has an excellent initial capacity and excellent stability for charge/discharge cycles under high-voltage charge/discharge conditions, since the first partially regular mixed structure and the second partially regular mixed structure are provided in the lithium layer or the transition metal layer of the cathode active material according to Experimental Example 13.

**[Table 33]**

| Test condition | Cathode | Unique nanoc ompos ite struc ture | 0.1C charge capad ity (mAh/ g) | 0.1C disch arge capac ity (mAh/ g) | 1^{st} effic iency (%) | 0.5C disch arge capac ity (mAh/ g) | 0.5C/ 0.1C | No. of cyc les | Cycle reten tion |
|---|---|---|---|---|---|---|---|---|---|
| 3.0-4.3 V, 30°C | NM7030 | O | 197.4 | 190.5 | 96.5% | 174.9 | 91.8% | 100 | 95.8% |
| 3.0-4.4 V, 30°C | | | 219.7 | 211.4 | 96.2% | 192.9 | 91.2% | 100 | 93.1% |

Table 34 is a table for describing characteristics for an initial capacity and charge/discharge cycles of all-solid-state batteries (half-cells) to which the cathode active materials according to Experimental Example 6 and 7 of the present invention are applied.

Referring to Table 34, the all-solid-state battery (half-cell) to which the cathode active material according to Experimental Example 6 (NCM501436) is applied was manufactured by the following method.

A cathode active material mixture was prepared by dry-mixing the cathode active material according to Experimental Example 6 (NCM501436), a solid electrolyte (Li₆PS₅C1), and conductive carbon (Super C) in a mortar grinder (using mortar and a pestle) in a weight ratio of 70:30:3. In addition, partially lithiated indium (nominal composition of Li0.5In) or lithium metal foil (20 µm) was prepared as an anode. The partially lithiated indium (Li0.5In) was prepared by mixing Li (FMC Lithium corp.) powder and In (Sigma-Aldrich, 99.99%) powder. In addition, the solid electrolyte (Li₆PS₅C1) was prepared in the form of a pellet by providing solid electrolyte powder (Li₆PS₅C1, 150 mg) in a polyaryletheretherketone (PEEK) mold. In addition, the cathode active material mixture (loading amount of 11.3 mg/cm²) is applied to one surface of the solid electrolyte (Li₆PS₅C1), and the anode is applied to an opposite surface of the solid electrolyte (Li₆PS₃C1) layer so as to form a structure. In addition, the all-solid-state battery (half-cell) to which the cathode active material according to Experimental Example 6 (NCM501436) is applied was prepared by compressing the structure at 370 MPa.

The all-solid-state battery (half-cell) to which the cathode active material according to Experimental Example 7 (NCM502030) is applied was manufactured in a method that is identical to the method for manufacturing the all-solid-state battery (half-cell) to which the cathode active material according to Experimental Example 6 (NCM501436) described above is applied, except that the cathode active material according to Experimental Example 7 (NCM502030) was used as a cathode active material.

In addition, an initial capacity and a capacity retention rate for 100 charge/discharge cycles were measured for the all-solid-state battery (half-cell) to which the cathode active material according to Experimental Example 6 (NCM501436) is applied and the all-solid-state battery (half-cell) to which the cathode active material according to Experimental Example 7 (NCM502030) is applied under test conditions of Table 34.

As shown in Table 34, it may be found that the initial capacities of the all-solid-state battery (half-cell) to which the cathode active material according to Experimental Example 6 is applied and the all-solid-state battery (half-cell) to which the cathode active material according to Experimental Example 7 is applied are at similar levels.

Meanwhile, it may be found that the all-solid-state battery (half-cell) to which the cathode active material according to Experimental Example 6 is applied has a superior capacity retention rate for charge/discharge cycles than the all-solid-state battery (half-cell) to which the cathode active material according to Experimental Example 7 is applied.

The factor of the above configuration may be interpreted to be due to the fact that collapse of a surface structure of the cathode active material is minimized during charge/discharge cycles, since the cathode active material according to

Experimental Example 6 has a partially regular mixed structure.

**[Table 34]**

| Test condition | Cathode | Unique nanocompo site structure | 0.1C Disch. Capa (mAh/g) | 1st Effic iency | 0.5 C Disch. Capa (mAh/g) | 0.5C/ 0.1C | Cyc le | 0.5C cycle reten tion |
|---|---|---|---|---|---|---|---|---|
| 3.0-4.3V (vs. Li+/Li) | NCM501436 | O | 159.6 | 78.3% | 141.7 | 88.8% | 100 | 96.3% |
| | NCM502030 | X | 158.2 | 74.6% | 140.0 | 88.5% | 100 | 90.2% |
| 3.0-4.5V (vs. Li+/Li) | NCM501436 | O | 175.7 | 76.4% | 154.8 | 88.1% | 100 | 88.7% |

Table 35 is a table for describing characteristics for an initial capacity and charge/discharge cycles of all-solid-state batteries (half-cells) to which the cathode active materials according to Experimental Example 9 and 10 of the present invention are applied.

Referring to Table 35, the all-solid-state battery (half-cell) to which the cathode active material according to Experimental Example 9 (NM9010) is applied was manufactured in a method that is identical to the method for manufacturing the all-solid-state battery (half-cell) to which the cathode active material according to Experimental Example 6 (NCM501436) described above is applied in Table 34, except that the cathode active material according to Experimental Example 9 (NM9010) was used as a cathode active material. In addition, the all-solid-state battery (half-cell) to which the cathode active material according to Experimental Example 10 (NCM900505) is applied was manufactured in a method that is identical to the method for manufacturing the all-solid-state battery (half-cell) to which the cathode active material according to Experimental Example 6 (NCM501436) described above is applied, except that the cathode active material according to Experimental Example 10 (NCM900505) was used as a cathode active material.

In addition, an initial capacity and a capacity retention rate for 100 charge/discharge cycles were measured for the all-solid-state battery (half-cell) to which the cathode active material according to Experimental Example 9 (NM9010) is applied and the all-solid-state battery (half-cell) to which the cathode active material according to Experimental Example 10 (NCM900505) is applied under test conditions of Table 35.

As shown in Table 35, it may be found that the initial capacities of the all-solid-state battery (half-cell) to which the cathode active material according to Experimental Example 9 is applied and the all-solid-state battery (half-cell) to which the cathode active material according to Experimental Example 10 is applied are at similar levels.

Meanwhile, it may be found that the all-solid-state battery (half-cell) to which the cathode active material according to Experimental Example 9 is applied has a superior capacity retention rate for charge/discharge cycles than the all-solid-state battery (half-cell) to which the cathode active material according to Experimental Example 10 is applied.

The factor of the above configuration may be interpreted to be due to the fact that collapse of a surface structure of the cathode active material is minimized during charge/discharge cycles, since the cathode active material according to Experimental Example 9 has a partially regular mixed structure.

**[Table 35]**

| Test condition | Cathode | Unique nanocompo site structure | 0.1C Disch. Capa (mAh/g) | 1st Efficie ncy | 0.5 C Disch. Capa (mAh/g) | 0.5C/ 0.1C | Cyc le | 0.5C cycle reten tion |
|---|---|---|---|---|---|---|---|---|
| 3.0-4.3V (vs. Li+/Li) | NM9010 | O | 204.5 | 88.2% | 180.6 | 88.3% | 100 | 87.8% |
| | NCM900505 | X | 205.7 | 87.9% | 183.1 | 89.0% | 100 | 78.4% |
| 3.0-4.4V (vs. Li+/Li) | NM9010 | O | 214.0 | 87.5% | 183.4 | 85.7% | 100 | 80.8% |
| | NCM900505 | X | 213.8 | 87.0% | 183.4 | 85.8% | 100 | 68.2% |

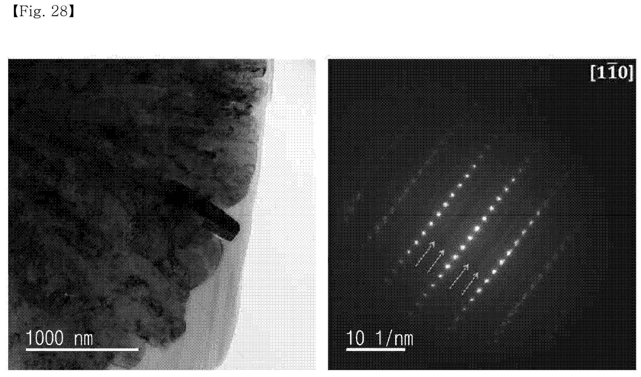

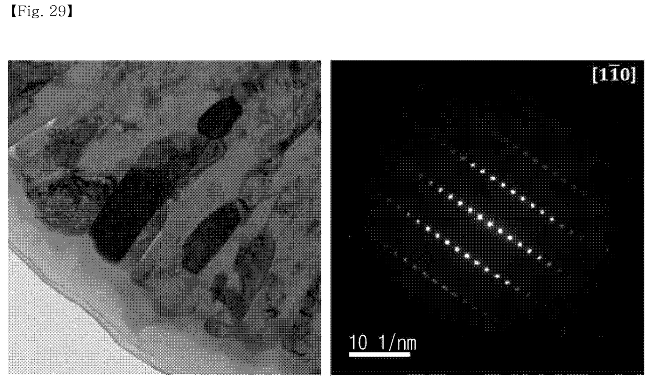

FIGS. 28 and 29 are photographs for describing crystal structures of cathode active materials according to Experimental Example 14 and Experimental Example 15 of the present invention.

Referring to FIG. 28, the cathode active material according to Experimental Example 14 (NCM700525) was photographed by TEM (left photo), and the cathode active material according to Experimental Example 14 (NCM700525) was analyzed by SAED in the [1, -1, 0] axis direction (right photo). Referring to FIG. 29, the cathode active material according to Experimental Example 15 (NCM701515) was photographed by TEM (left photo), and the cathode active material according to Experimental Example 15 (NCM701515) was analyzed by SAED in the [1, -1, 0] axis direction (right photo).

As shown in FIG. 28, it may be found that electron diffraction patterns corresponding to a first partially regular mixed structure and a second partially regular mixed structure were observed in the cathode active material according to Experimental Example 14. In contrast, as shown in FIG. 29, it may be found that a partially regular mixed structure was not observed in the cathode active material according to Experimental Example 2.

Table 36 is a table for describing characteristics for an initial capacity and charge/discharge cycles of half-cells to which the cathode active materials according to Experimental Examples 14 and 15 of the present invention are applied.

Referring to Table 36, the initial capacity and a capacity retention rate for 100 charge/discharge cycles were measured for the half-cell to which the cathode active material according to Experimental Example 14 (NCM700525) is applied under test conditions of Table 36, and the initial capacity and a capacity retention rate for 100 charge/discharge cycles were measured for the half-cell to which the cathode active material according to Experimental Example 15 (NCM701515) is applied under the test conditions of Table 36.

As shown in Table 36, it may be found that under conditions of 3.0 V to 4.3 V and 30 °C, the half-cell to which the cathode active material according to Experimental Example 14 is applied exhibits an initial capacity of 192.2 mAh/g and a capacity retention rate of 94.9% based on 4.3 V (cut-off). In addition, it may be found that the half-cell to which the cathode active material according to Experimental Example 15 is applied exhibits an initial capacity of 194.9 mAh/g and a capacity retention rate of 92.1% based on 4.3 V (cut-off).

It may be found that under conditions of 3.0 V to 4.4 V and 30 °C, the half-cell to which the cathode active material according to Experimental Example 14 is applied exhibits an initial capacity of 212.2 mAh/g and a capacity retention rate of 92.2% based on 4.4 V (cut-off). In addition, it may be found that the half-cell to which the cathode active material according to Experimental Example 15 is applied exhibits an initial capacity of 213.4 mAh/g and a capacity retention rate of 87.4% based on 4.4 V (cut-off).

Therefore, it may be found that the initial capacities of the half-cell to which the cathode active material according to Experimental Example 14 is applied and the half-cell to which the cathode active material according to Experimental Example 15 is applied are at similar levels. Meanwhile, it may be found that the half-cell to which the cathode active material according to Experimental Example 14 is applied has a superior capacity retention rate for charge/discharge cycles than the half-cell to which the cathode active material according to Experimental Example 15 is applied.

The factor of the above configuration may be interpreted to be due to the fact that the first partially regular mixed structure and the second partially regular mixed structure are provided in the lithium layer or the transition metal layer of the cathode active material according to Experimental Example 14.

**[Table 36]**

| Test condition | Cathode | Uniqu e nanoc ompos ite struc ture | 0.1C charg e capad ity (mAh/ g) | 0.1C disch arge capac ity (mAh/ g) | 1st effic iency (%) | 0.5C Disch arge capac ity (mAh/ g) | 0.5C/ 0.1C | No. of cyc les | Cycle reten tion |
|---|---|---|---|---|---|---|---|---|---|
| 3.0-4.3V, 30°C | NCM700525 | O | 202.1 | 192.2 | 95.1% | 177.4 | 92.3% | 100 | 94.9% |
| | NCM701515 | X | 203.4 | 194.9 | 95.8% | 179.9 | 92.3% | 100 | 92.1% |
| 3.0-4.4V, 30°C | NM700525 | O | 220.4 | 212.2 | 96.3% | 194.1 | 91.5% | 100 | 92.2% |
| | NCM701515 | X | 220.7 | 213.4 | 96.7% | 194.4 | 91.1% | 100 | 87.4% |

Although the exemplary embodiments of the present invention have been described in detail above, the scope of the present invention is not limited to a specific embodiment, and shall be interpreted by the appended claims. In addition, it is to be understood by a person having ordinary skill in the art that various changes and modifications can be made without departing from the scope of the present invention.

### [Industrial Applicability]

The cathode active material according to the embodiment of the present invention may be used in various devices such as lithium secondary batteries, all-solid-state batteries, electric vehicles, mobile devices, and ESS.

## Claims

1. A cathode active material including lithium, a transition metal, and oxygen, the cathode active material comprising:
a layered crystal structure in which a lithium layer including the lithium and a transition metal layer including the transition metal are alternately and repeatedly arranged,
wherein the cathode active material includes a partially regular mixed structure in which a structure, which is configured such that the transition metal or the lithium is regularly arranged with a predetermined cycle within the transition metal layer or the lithium layer, is provided to the lithium layer or the transition metal layer.

2. The cathode active material of claim 1, wherein the partially regular mixed structure includes a first mixed structure and a second mixed structure,
the first mixed structure includes a first unit arrangement,
the second mixed structure includes a second unit arrangement,
the first unit arrangement is configured such that the transition metal is consecutively arranged twice, and the lithium is arranged once, and
the second unit arrangement is configured such that the lithium is consecutively arranged twice, and the transition metal is arranged once.

3. The cathode active material of claim 2, wherein the first mixed structure and the second mixed structure are configured such that upon crystal structure analysis of crystal grains of the cathode active material in a [1, -1, 0] axis direction, a streak-shaped electron diffraction pattern that does not belong to an R-3m layered crystal structure is observed at 1/3 and 2/3 points between electron diffraction dots exhibiting the R-3m layered crystal structure in selected area electron diffraction (SAED) .

4. The cathode active material of claim 1, wherein the partially regular mixed structure includes a third mixed structure, and
the third mixed structure is configured such that the lithium and the transition metal are alternately and repeatedly arranged.

5. The cathode active material of claim 4, wherein the third mixed structure is observed, upon crystal structure analysis of crystal grains of the cathode active material in a [1, -1, 0] axis direction, as an additional-dot-shaped electron diffraction pattern that does not belong to an R-3m layered crystal structure at a 1/2 point between electron diffraction dots exhibiting the R-3m layered crystal structure in selected area electron diffraction (SAED).

6. The cathode active material of claim 1, wherein a volume variation of a unit cell is reduced by the partially regular mixed structure upon charging/discharging.

7. The cathode active material of claim 1, wherein the transition metal includes at least one of nickel, cobalt, or manganese.

8. The cathode active material of claim 7, wherein when an atomic ratio of the nickel in the transition metal is 45 at%, an atomic ratio of the manganese is greater than or equal to 30 at%, or
when the atomic ratio of the nickel in the transition metal is 50 at%, the atomic ratio of the manganese is greater than or equal to 32 at%.

9. The cathode active material of claim 6, wherein, in the cathode active material including the lithium, the transition metal, and the oxygen,
the transition metal includes at least one of nickel, cobalt, or manganese, and
when a molar ratio of the nickel in the transition metal is greater than 0.8 and less than or equal to 0.9, a volume variation of a unit cell is less than or equal to 9% upon charging at 4.5 V,
when the molar ratio of the nickel in the transition metal is greater than 0.7 and less than or equal to 0.8, the volume variation of the unit cell is less than or equal to 7% upon the charging at 4.5 V,
when the molar ratio of the nickel in the transition metal is greater than 0.6 and less than or equal to 0.7, the volume variation of the unit cell is less than or equal to 5% upon the charging at 4.5 V,
when the molar ratio of the nickel in the transition metal is less than or equal to 0.6, the volume variation of the unit cell is less than or equal to 4% upon the charging at 4.5 V, or
when the molar ratio of the nickel in the transition metal is less than or equal to 0.6, the volume variation of the unit cell is less than or equal to 6% upon charging at 4.7 V.

10. The cathode active material of claim 7, wherein when a molar ratio of the nickel in the transition metal is less than or equal to 0.5, a phase transition to H2/H3 is prevented upon charging at 4.8 V or more.

11. The cathode active material of claim 7, wherein when a molar ratio of the nickel in the transition metal is less than or equal to 0.5, heat is generated at 225 °C or more upon charging at 4.5 V.

12. The cathode active material of claim 1, wherein the cathode active material is applied to a cathode of a high-performance all-solid-state battery.

13. A method for manufacturing a cathode active material, the method comprising:
preparing a transition metal source;
providing the transition metal source, an ammonia chelating agent, and a pH regulator in a reactor, and preparing a cathode active material precursor including transition metal hydroxide by a coprecipitation synthesis scheme; and
preparing the cathode active material by mixing and sintering the cathode active material precursor and a lithium precursor,
wherein the cathode active material includes lithium, a transition metal, and oxygen,
a lithium layer including the lithium and a transition metal layer including the transition metal are alternately and repeatedly arranged,
a partially regular mixed structure in which the transition metal and the lithium are mixed is provided to the lithium layer or the transition metal layer, and
generation of the partially regular mixed structure is controlled according to a pH value of the reactor and an input molar ratio of the ammonia chelating agent and the transition metal source.

14. The method of claim 13, wherein in the providing of the transition metal source, the ammonia chelating agent, and the pH regulator in the reactor, and the preparing of the cathode active material precursor including the transition metal hydroxide by the coprecipitation synthesis scheme,
the pH value of the reactor is controlled to be greater than or equal to 11.0, and less than or equal to 11.3.

15. The method of claim 13, wherein in the providing of the transition metal source, the ammonia chelating agent, and the pH regulator in the reactor, and the preparing of the cathode active material precursor including the transition metal hydroxide by the coprecipitation synthesis scheme,
the input molar ratio of the ammonia chelating agent and the transition metal source is controlled to be greater than 1:0.8 and less than 1:1.3.
